(19) Europäisches Patentamt
European Patent Office
Office européen des brevets

(11) **EP 2 554 589 B1**

(12) **EUROPEAN PATENT SPECIFICATION**

(45) Date of publication and mention
of the grant of the patent:
**13.12.2017 Bulletin 2017/50**

(51) Int Cl.:
*C08L 1/04* (2006.01)          *B32B 9/00* (2006.01)
*B32B 27/12* (2006.01)        *B65D 65/40* (2006.01)
*C08K 3/34* (2006.01)          *C08K 5/5415* (2006.01)

(21) Application number: **11759168.5**

(22) Date of filing: **03.03.2011**

(86) International application number:
**PCT/JP2011/054989**

(87) International publication number:
**WO 2011/118360 (29.09.2011 Gazette 2011/39)**

(54) **FILM-FORMING COMPOSITION AND SHEET**

FILMBILDENDE ZUSAMMENSETZUNG UND FOLIE DARAUS

COMPOSITION ET FEUILLE FILMOGENES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010 JP 2010082331
29.03.2010 JP 2010075185
26.03.2010 JP 2010071712**

(43) Date of publication of application:
**06.02.2013 Bulletin 2013/06**

(73) Proprietor: **Toppan Printing Co., Ltd.**
**Tokyo 110-0016 (JP)**

(72) Inventors:
• **IMAI Kazuko**
**Tokyo 110-0016 (JP)**
• **OOMORI Yumiko**
**Tokyo 110-0016 (JP)**
• **KIMURA Mitsuharu**
**Tokyo 110-0016 (JP)**
• **SAIKI Akiko**
**Tokyo 110-0016 (JP)**

(74) Representative: **TBK**
**Bavariaring 4-6**
**80336 München (DE)**

(56) References cited:
**EP-A1- 2 130 672          EP-A1- 2 551 104
EP-A1- 2 551 105          WO-A1-2010/055839
JP-A- 2001 279 016      JP-A- 2008 001 728
JP-A- 2008 274 525      JP-A- 2009 298 972
JP-A- 2009 299 043**

**Description**

TECHNICAL FIELD

The present invention relates to a cellulose nanofiber composition for forming a film and a film sheet with a film made from the cellulose nanofiber composition.

BACKGROUND ART

Wrapping and/or packaging materials are required to have gas barrier properties, which means impermeability to gases such as oxygen, water vapor and other gases which alter the quality of the content, in order to prevent degradation in quality of the content and to retain functionality and characteristics of the content. Until now, wrapping and/or packaging materials in which a metal foil of a metal such as aluminum, etc. or a film of vinylidene chloride, which are not affected by conditions of temperature and humidity, etc., is used as a gas barrier layer have generally been used. Wrapping and/or packaging materials in which a metal foil is used have disadvantages such as the content being not visible, waste after unwrapping should be disposed as unburnable garbage, and a residue being left if incinerated. Wrapping and/or packaging materials in which a film of vinylidene chloride is used have the problem of generating dioxine when incinerated. Thus, the use of these wrapping and/or packaging materials is regarded as a cause of environmental pollution and has not been favored in recent years.

Meanwhile, substitution of wrapping and/or packaging materials with a PVA type resin (such as a copolymer of polyvinyl alcohol (PVA) and ethylene vinyl alcohol), which is free from aluminum and chloride, for the wrapping and/or packaging materials with aluminum foil or vinylidene chloride has been attempted. For example, a laminated material made by coating a coating agent with a PVA type resin to form a barrier layer on a substrate is proposed (Patent document 1). In addition, a coating agent blended together with an alkoxysilane such as tetraethoxysilane or its hydrolysates in order to improve gas barrier properties and water resistivity of the gas barrier layer is proposed (Patent documents 2 and 3).

However, since similar to vinylidene chloride, a PVA type resin is a chemical derived from petroleum, other materials derived from natural products are more desirable. Naturally derived cellulose, which is yieldable on a massive scale, is particularly promising for the use of a variety of functional materials such as wrapping and/or packaging materials.

Although so-called biodegradable materials or plant-derived materials such as paper and polylactic acid, etc. for the use of wrapping and/or packaging are also investigated, there is the problem that the biodegradable materials and plant-derived materials have poor gas barrier properties. Attempts to coat a film or a coating material having a high level of gas barrier properties on papers and polylactic acid used as a substrate were made to provide the substrate with gas barrier properties. It is, however, well known that papers and polylactic acid have poor adhesiveness, which is caused by stability inherent to materials derived from natural products and problems such as bleeding out of small molecules, crystallization and surface degradation, and thus a material which is derived from biomass and has a high level of gas barrier properties and rich adhesiveness has not been obtained.

Under these circumstances, a film in which a material obtained by an oxidation (TEMPO oxidation) treatment of a plant fiber, for example, in wood pulp, etc. using an N-oxyl such as 2, 2, 6, 6-tetramethylpiperidine-N-oxyl (TEMPO), etc. as an oxidation catalyst is used is proposed. Primary hydroxyl groups in cellulose (that is, the hydroxyl groups on the sixth carbon of the glucopyranose rings) are oxidized at a high selectivity so that - $CH_2OH$ groups are transformed into formyl groups as an intermediate and finally into carboxy groups by the TEMPO oxidation treatment. A gas barrier using such a material is disclosed in Patent document 4, for example.

In addition, cellulose nanofiber has attracted attention in recent years. Cellulose microfibrils, each of which is made of tens of or hundreds of cellulose molecules, are gathered to form a fiber in a natural cellulose fiber, and each of the cellulose microfibrils are bonded to one another by a large amount of hydrogen bonding on the surface. Since the cellulose nanofiber is such a fiber of cellulose separated into nanometers size (namely, into a size similar to that of the microfibrils) and has high crystallinity and advantages in strength, heat resistance and low thermal expansibility, applications to a variety of functional materials are expected.

Bacterial cellulose and a nanofibered cellulose obtained by fiberizing cellulose composition in a wood pulp by a mechanical treatment are examples of the cellulose nanofiber. These cellulose nanofibers, however, have the problem that a resultant film is inferior in transparency and gas impermeability because of a large fiber width and a low level of fiber uniformity.

Recently, a method using TEMPO oxidation has been developed as a manufacturing method of the cellulose nanofiber and is being researched. A cellulose fiber treated by TEMPO oxidation is easily fiberized by a simple mechanical process in an aqueous medium, as is disclosed for example in Patent documents 5 and 6. It seems that this occurs because of electrostatic repulsions among the carboxy groups introduced onto the surface of the nanofiber. A film manufactured from an aqueous dispersion of a cellulose nanofiber obtained in this way forms a dense film in which the cellulose nanofibers are bonded to one another by hydrogen bonding and achieves a high level of gas barrier properties.

For example, Patent document 7 discloses a method in which a gas barrier material containing cellulose fibers having an average diameter of 200 nm or less is manufactured by oxidizing a pulp by TEMPO oxidation and dispersing the oxidized pulp in water and then the gas barrier material is coated on a substrate such as polyethylene terephthalate (PET) film, etc. and dried so that a gas impermeable complex compact is obtained.

EP2551104 (A1) relates to a gas barrier laminate including a base material and a gas barrier layer provided on at least one side of the base material. The gas barrier layer contains at least cellulose fibers and one or more kinds of water-soluble polymer. Additionally, the fiber width of the cellulose fibers falls within a range of 3 nm to 50 nm.

EP2551105 (A1) relates to a laminated body including, on at least one surface of a base made of paper, a fiber layer containing fine cellulose fibers each having a fiber diameter of 1 nm or more and 10 $\mu$m or less. In particular, the fine cellulose fibers preferably have a fiber diameter of 1 nm or more and 30 nm or less.

WO2010055839 (A1) relates to composite compositions comprising a fibrous filler and at least a resin, a metal oxide or a flaked inorganic material, and which are characterized in that the mean fiber diameter of said fibrous filler is 4-1000 nm. Said fibrous filler is preferably a cellulose fiber. The cellulose fiber is preferably a fiber obtained by fining a cellulose starting material using at least chemical processing or mechanical processing. Some of the hydroxyl groups included in the cellulose molecule are preferably oxidized to either an aldehyde group or a carboxyl group. The composites are made by molding said composite compositions.

EP2130672 (A1) relates to a flexible substrate formed of a thin glass sheet having a thickness of 50 $\mu$m or less and a composite material sheet having a thickness of 100 $\mu$m or less which are laminated together, the composite material sheet being formed of a composite material of an aggregation of cellulose nanofiber and amorphous synthetic resin.

JP2008001728 (A) provides a cellulose nanofiber obtained by utilizing a surface oxidization reaction of the cellulose by an N-oxyl compound. The fine cellulose fiber has a maximum fiber diameter of at most 1,000 nm and a number-average fiber diameter of 2-150 nm, has a part of hydroxy groups of the cellulose oxidized into at least one functional group selected from the group consisting of a carboxyl group and an aldehyde group, and has a cellulose I type crystal structure.

CITATION LIST

PATENT DOCUMENTS

Patent document 1: JP-A-H06-316025.
Patent document 2: JP-A-H07-164591.
Patent document 3: JP-A-2002-173631.
Patent document 4: JP-A-2001-334600.
Patent document 5: JP-A-2008-308802.
Patent document 6: JP-A-2008-1728.
Patent document 7: JP-A-2009-057772.

SUMMARY OF THE INVENTION

TECHNICAL PROBLEM

The film manufactured from the aqueous dispersion of cellulose nanofiber described above has the problem of low adhesiveness to a substrate such as PET film. because of high rigidity and low reactivity of the cellulose nanofiber. The low adhesiveness causes the trouble of peeling off from the substrate even when it is necessary to use the film as laminated on the substrate.

In the case where a film is formed on a substrate by a wet coating, in general, there are options such as a method of preliminarily performing a surface treatment on the substrate and/or a method of arranging a primary layer and/or an anchor layer on the substrate, etc. in order to improve adhesiveness of the film to the substrate. These options, however, are not preferable considering that the manufacturing method becomes more complicated and costs are high due to an additional process and/or that the substrate may be degraded, etc.

Another option is a method of improving the adhesiveness by adding an additive to the film forming material. According to an investigation by the inventors, however, in the case where the aqueous dispersion of cellulose nanofiber is used as the film forming material, it is necessary to add a large amount of additive or to use a highly reactive additive in order to sufficiently improve the adhesiveness because of high rigidity and/or low reactivity of the cellulose nanofiber. When a large amount of additive is added or a highly reactive additive (even if the amount is small) is used, the resultant cellulose nanofiber has inferior gas barrier properties. It seems that this is because a dense film structure is not maintained due to a decrease of hydrogen bondings among cellulose nanofibers and thus a gas permeable pathway is created.

Moreover, in the case where a gas barrier layer is formed with the cellulose nanofiber described above, there is the problem that the gas barrier layer has severely low gas barrier properties under a high humidity condition while the gas barrier layer retains fairly good gas barrier properties in a dry state. As to the gas barrier material disclosed in Patent document 7, the resultant gas impermeable compact is provided with gas barrier properties under a high humidity condition by arranging an additional moisture-proof layer other than the cellulose nanofiber layer. However, a method in which the cellulose nanofiber itself is made moisture-proof is desirable for solving the problem above because the cellulose nanofiber itself significantly swells with and/or absorbs moisture. In addition, the cellulose fiber obtained by the manufacturing method disclosed in Patent document 7 may possibly contain a carboxylate salt. Since a carboxylate salt is highly water-absorbable, the cellulose nanofiber may be swollen causing a decrease in gas barrier properties. Hence, it is necessary to inhibit water absorption by the cellulose nanofiber itself in order to solve the above problem.

Due to such circumstances, the applicants invented the present invention. It is an object of the present invention to provide a composition for forming a film, the composition being adapted to form a film having a high adhesiveness to a substrate and having good gas barrier properties, and to provide a film sheet which includes the film formed using the composition for forming a film.

In addition, it is an object of the present invention to provide a gas-impermeable film sheet having excellent gas barrier properties even under a condition of high humidity.

SOLUTION TO THE PROBLEM

In order to solve the above problem, the present invention includes the following: An invention according to claim 1 is a composition for forming a film, the composition including a silane coupling agent, wherein a silane coupling agent having an amino group is included in the silane coupling agent, and an aqueous dispersion liquid in which a cellulose nanofiber is dispersed in an aqueous medium.

In addition, an invention according to claim 2 is the composition for forming a film according to claim 1, wherein a ratio of the silane coupling agent added to the aqueous dispersion liquid is in the range of 0.5-150 wt% with respect to the cellulose nanofiber.

In addition, an invention according to claim 3 is the composition for forming a film according to claim 2, wherein a ratio of the silane coupling agent having an amino group added to the aqueous dispersion liquid is in the range of 0.5-30 wt% with respect to the cellulose nanofiber.

In addition, an invention according to claim 4 is the composition for forming a film according to claim 1, wherein the cellulose nanofiber is a crystalline cellulose and has a cellulose I type crystal structure.

In addition, an invention according to claim 5 is the composition for forming a film according to claim 4, wherein the cellulose nanofiber includes oxidized cellulose.

In addition, an invention according to claim 6 is the composition for forming a film according to claim 5, wherein the oxidized cellulose is obtained by an oxidation reaction using a nitroxyl radical derivative.

In addition, an invention according to claim 7 is the composition for forming a film according to claim 6, further including an inorganic layered compound.

In addition, an invention according to claim 8 is a film sheet including a film formed using the composition for forming a film according to claim 1.

In addition, an invention according to claim 9 is the film sheet according to claim 8, wherein the film is laminated on a substrate.

In addition, an invention according to claim 10 is the film sheet according to claim 9, wherein a deposited layer comprising an inorganic compound is formed on a surface of the substrate.

In addition, an invention according to claim 11 is the film sheet according to claim 10, wherein the inorganic compound is selected from the group of aluminum oxide, magnesium oxide and silicon oxide.

In addition, an invention according to claim 12 is the film sheet according to either claim 8 or claim 9, further comprising a thermoplastic resin layer which makes it possible to weld or adhere by heat.

In addition, an invention according to claim 13 is the use of a film sheet according to any one claim of claim 8 to claim 12 as a gas barrier material.

ADVANTAGEOUS EFFECT OF THE INVENTION

According to the present invention, it is possible to obtain a composition for forming a film, the composition being adapted to form a film having a high adhesiveness to a substrate and having good gas barrier properties, as well as a film sheet which includes the film formed using the composition for forming a film.

In addition, it is possible to obtain a gas impermeable film sheet having excellent gas barrier properties even under a condition of high humidity.

DESCRIPTION OF THE EMBODIMENT

<Composition for forming a film>

A composition for forming a film of the present invention is a blended solution of "aqueous dispersion liquid in which cellulose nanofiber is dispersed in an aqueous medium" (hereinafter referred to as "nanofiber dispersion liquid") with a silane. The composition is shown in detail in the embodiments below.

A composition for forming a film of the present invention is a blended solution of aqueous dispersion liquid in which cellulose nanofiber is dispersed in an aqueous medium with a silane coupling agent, wherein a silane coupling agent having an amino group is included in said silane coupling agent.

It is possible to form a film which is highly adhesive to a substrate and has good gas barrier properties by using the composition for forming a film. In addition, the film is highly waterproof and hardly swells with water. Thus, water or moisture seldom adversely affects the adhesiveness and gas barrier properties of a film sheet including the film. The film sheet retains an excellent durability and gas barrier properties even under a high humidity condition.

It seems that a reason why the effect of improving adhesiveness etc. is achieved is that hydroxyl groups in cellulose nanofiber and functional groups on a surface of the substrate electrostatically interact with each other or bind to each other by hydrogen bonding or covalent bonding.

In addition, the composition for forming a film of the present invention may be prepared by blending an aqueous dispersion liquid (a), which has a pH of 4-9 and contains a cellulose nanofiber, and a hydrolysis liquid (b), which has a pH of 2-4 and contains hydrolysates of an alkoxysilane, at a blend ratio by weight in the range 0.1-5.0 of (the cellulose nanofiber)/(the alkoxysilane, calculated in terms of $SiO_2$).

Since the film formed using the composition for forming a film evenly contains cross-linking alkoxysilane, it is possible to prevent water vapor from seeping into or permeating the film, which causes a decrease in gas barrier properties, and to prevent the cellulose nanofiber from absorbing and swelling with moisture so that the film retains excellent gas barrier properties even under a high humidity condition. It seems that the reason for this is as follows: Firstly, the hydrolysis reaction evenly proceeds by hydrolyzing the alkoxysilane at a predetermined pH. Subsequently, the resultant hydrolysis liquid (b) is blended together with the aqueous dispersion liquid (a), which contains the cellulose nanofiber and is prepared to have a pH more acidic than conventional liquids, in such a way that the pH change is moderated within a predetermined range so that the hydrolysates of the alkoxysilane are not exposed to a drastic pH alteration. As a result, an occurrence of agglutination, which is attributed to an uneven condensation of the hydrolysates of the alkoxysilane and causes a decrease of gas barrier properties, is inhibited.

In the case where the pH of any of the aqueous dispersion liquid (a) and the hydrolysis liquid (b) and/or the blend ratio by weight of (the cellulose nanofiber)/(the alkoxysilane, calculated in terms of $SiO_2$) is outside of the above range, gas barrier properties of the film under a high humidity condition become poor. In addition, in the case where not the hydrolysates of the alkoxysilane but the alkoxysilane itself is directly added to the aqueous dispersion liquid (a), the condensation reaction drastically proceeds while the hydrolysis is yet insufficient, and thus the agglutination occurs resulting in a poor gas barrier properties of the film under a high humidity condition.

In addition, the film formed using the composition for forming a film of the present invention described above has high affinity with the substrate and excellent adhesiveness to the substrate because the composition contains hydrolysates of alkoxysilane.

<Nanofiber dispersion liquid>

The cellulose nanofiber is made of a microfibril(s) of cellulose and/or its derivatives (hereinafter also referred to as "celluloses"), the microfibril(s) having a fiber width of 3-5 nm, or several bundles (or up to hundreds of bundles) of such microfibrils.

It is preferable that the cellulose nanofiber used in the present invention has an average fiber width in the range of 3-50 nm, more preferably in the range of 3-30 nm.

Since the cellulose nanofiber forms a film by tangling the fibers, interspaces or gaps are left among the fibers. It is undesirable that the average fiber width of the cellulose nanofiber is greater than 50 nm, the upper limit of the range mentioned above, because excessively large interspaces or gaps are left among the fibers, and the interspaces or gaps allow a damaging substance such as water vapor etc., which causes a decrease in gas barrier properties, to seep into or permeate the film. In addition, if the average fiber width is greater than 100 nm, still larger interspaces or gaps are left among the fibers, and the problem that the interspaces or gaps are combined with one another to create a through-hole and the resultant film has a structure that allows gases such as oxygen and water vapor, etc. to pass through easily may occur. When a surface of a film made of the cellulose nanofiber having an average fiber width of about 100 nm is observed, for example, an interspace or gap of more than 80 nm, which is a part of a through-hole and causes a decrease in gas barrier properties, can be found. On the other hand, if the average fiber width is in the range mentioned above, the tangle of fibers becomes tight in the resultant film so that no trough-hole and only smaller interspaces or gaps are left. If the average fiber width is in the range of 3-30, which is more preferable, almost no interspaces or gaps are left so that the resultant film has excellent gas barrier properties. If the average fiber width is in the range of 3-10, which is still more preferable, the resultant film has a dense structure and excellent gas barrier properties. The greater the fiber width is, the lower the transparency of the film is. When the fiber width is in the range mentioned above, which is sufficiently small compared with wavelengths of visible light, the resultant film has excellent transparency.

It is possible to measure the average fiber width of the cellulose nanofiber by observing a surface of the film by a scattering electron microscope (S-4800, made by Hitachi High-Technologies Corporation) and counting the average number. Then at the same time, it is possible to observe the interspaces or gaps between the fibers presented in the surface of the film as well.

It is possible to evaluate transparency of the film by measuring its haze and light transmittance (or total luminous transmittance) using a haze meter (or turbidimeter) NDH2000 made by Nippon Denshoku Industries Co., Ltd. When measuring, a cast film, for example, can be used as a sample. The cast film can be obtained in such a way that a predetermined amount of a composition for forming a film, the composition containing cellulose nanofiber, is filled in a rectangular case made of polystyrene and is thermally dried at 50 C° in an oven for 24 hours.

It is preferable that the cellulose nanofiber contains a carboxy group in order to prevent the cellulose nanofibers agglutinating (or clumping together) so that they evenly disperse in a solvent. Both carboxy groups in acid type (-COOH) and in base type (-COO-) are available as the carboxy group.

It is preferable that the amount of carboxy group in the cellulose nanofiber (a molar quantity of the carboxy group in 1 gram of cellulose nanofiber) is in the range of 1.0 to 3.5 mmol/g, more preferably in the range of 1.2 to 3.5 mmol/g. If the amount of carboxy group is smaller than 1.0 mmol/g, it is difficult to obtain cellulose nanofibers having a fiber width in the range mentioned above. It is undesirable that the amount is greater than 3.5 mmol/g because crystallinity tends to be drastically low, and gas barrier properties, particularly under a high humidity condition, are adversely affected.

It is possible to manufacture the cellulose nanofiber by a conventional method. A method of fiberizing a cellulose nanofiber precursor (or pre-product) to transform it into a nanofiber is one example of the conventional method. The cellulose nanofiber precursor (or pre-product) here is celluloses before being fiberized, which are made of bundles of microfibril.

It is preferable that celluloses made of cellulose oxides are used as the cellulose nanofiber precursor (or pre-product). The cellulose oxides are celluloses in which a carboxy group(s) is introduced into at least any of glucopyranose rings in the cellulose molecule by an oxidation treatment. The cellulose oxides cause a smaller environmental burden and are more easily transformed into a nanofiber than in case of other cellulose derivatives. That is, whereas celluloses contained in natural raw cellulose (such as pulp, etc.) form multiple bundles of fibers by strong interactive forces among microfibrils (hydrogen bonds on the surfaces), cellulose oxides can be easily converted into nanofibers because the interactive forces are reduced by introducing the carboxy group(s).

It is preferable that the cellulose oxides are obtained by employing an oxidation treatment in which an N-oxyl such as 2, 2, 6, 6-tetramethylpiperidine-N-oxyl (TEMPO), etc. as a catalyst is used (TEMPO oxidation treatment) as the oxidation treatment mentioned above. Primary hydroxyl groups in cellulose (that is, the hydroxyl groups on the sixth carbon of the glucopyranose rings) are oxidized at a high selectivity so that -CH$_2$OH groups are transformed into aldehyde groups as an intermediate and finally into carboxy groups by the TEMPO oxidation treatment. If the TEMPO oxidation is employed, it is possible to efficiently and evenly introduce carboxy groups in proportion to the degree of oxidation progress. In addition, the TEMPO oxidation treatment harms crystallinity of the cellulose less than other oxidation treatments because inner parts of the microfibrils are kept unoxidized. Accordingly, microfibrils of the cellulose oxides obtained by the TEMPO oxidation retain high crystallinity (type I crystal structure), which has a natural cellulose. This high crystallinity provides for a high level of gas barrier properties.

In other words, it is preferable that the cellulose nanofiber is crystalline and has cellulose I type crystallinity. In addition, it is preferable that the degree of crystallinity of the cellulose nanofiber is 50 % or higher, more preferably 70 % or higher.

It is possible to measure the crystalline structure and the degree of crystallinity of the cellulose nanofiber by using, for example, an x-ray diffractometer (Rigaku RINT 2500VC X-RAY diffractometer, made by Rigagu Corporation). A dried product, a cast film or a coated film of cellulose nanofiber can be used as a sample for the measurement.

The cellulose I type crystalline structure in the present specification refers to such a structure that shows two typical diffraction peaks corresponding to approximately $2\theta$ = 15-16 degrees and 22-23 degrees. At this time, the crystallinity can be calculated by the formula below.

$$\text{"Degree of cellulose I type crystallinity (\%)"} = (Ia - Ib) / Ia \times 100$$

Ia : The peak intensity when $2\theta = 15\text{-}16°$.

Ib : The intensity corresponding to the point of intersection between two lines, one of which is a line that passes through the intensity when $2\theta = 11°$ and the intensity when $2\theta = 18°$, the other one of which is a line of $2\theta = 15\text{-}16°$ (which means the peak intensity in the amorphous region).

In addition, natural celluloses have a fiber structure composed of microfibrils, each of which is the minimum fibrous unit and has cellulose I type crystallinity, the microfibrils being gathered and oriented in various directions by a large amount of hydrogen bondings acting among them in the fiber structure. Since the gathering force caused by the hydrogen bondings among the microfibrils is extremely strong, a very high energy is generally necessary to fiberize celluloses extracted from a wood, etc. into a piece of the microfibril. Accordingly, when obtaining a cellulose nanofiber having a fiber width of 50 nm or less, an oxidation process of introducing a carboxy group onto a surface of the microfibril in order to weaken the hydrogen bondings and a dispersion process for the purpose of fiberizing the fiber into pieces are sequentially performed. In the case where the amount of the carboxy group is less than 1 mmol/g after the oxidation process, it is impossible to sufficiently fiberize the fiber into pieces by the dispersion process. In the case where the amount of the carboxy group is in the range of 1 mmol (inclusive) to 2 mmol/g (exclusive), it is necessary to further add a cation which is a counter-ion to the carboxy group to increase electrostatic repulsions so as to obtain a cellulose nanofiber with a desirable fiber width.

After adding the cation or the counter-ion and performing the dispersion process, the cellulose nanofiber includes a carboxylic salt so that it absorbs water and swells with the water. Since the cellulose nanofiber expands to many times its original size (possibly up to tens of times) by the swelling, a coating liquid containing it would have a high viscosity and a thixotropic nature, which cause poor handleability and coating suitability. In addition, the swelling of the cellulose nanofiber causes a decrease of gas barrier properties. A cellulose nanofiber with carboxy groups less than 2 mmol/g has such high water absorbability that a cast film made from it expands to more than about ten times its size after dipping in water for a minute compared to before the dipping. The film of it after absorbing water can be broken easily. Then, it may be difficult to maintain gas barrier properties and/or robustness of the film under a condition of high humidity when the film is used as a gas barrier material.

In the case where the cation is added, its additive amount can be reduced more as the amount of the carboxy groups increases. If the amount of the carboxy groups is 2 mmol/g or more, it is possible to fiberize the celluloses by adding only a tiny amount of the cation or the counter-ion, or even by adding no cation or counter-ion. In such a case, since a cellulose nanofiber has poor water absorbability, which relates to gas barrier properties, a film with a high level of gas barrier properties, even under a condition of high humidity , can be obtained.

The manufacture of oxidized cellulose by TEMPO oxidation treatment is performed, for example, in such a way that a raw material of celluloses such as pulp, etc. receives the oxidation treatment in water under a presence of an N-oxyl.

At this time, it is preferable that an oxidant is also used together with the N-oxyl. When the oxidant is used together, the N-oxyl is oxidized by the oxidant to produce an oxo-ammonium salt, and the celluloses are oxidized by the oxo-ammonium salt. The oxidation reaction proceeds smoothly even under a moderate condition and carboxy groups are effectively introduced by employing such an oxidation treatment.

In addition, it is possible to further add at least one bromide or iodide as a catalyst other than the N-oxyl so that it is used together with the N-oxyl and the oxidant.

The raw material for the celluloses which is mentioned above is not limited as long as any cellulose is contained. The examples are various wood pulps of softwood and hardwood, non-wood pulps of kenaf, bagasse, straw, bamboo, cotton and sea weed etc., bacterial celluloses, pulps of waste paper, cottons, valonia celluloses and celluloses from sea squirts, etc.

Other than the TEMPO (2, 2, 6, 6-tetramethylpiperidine-N-oxyl), 2,2,6,6-tetramethyl-4-hydroxypiperidine-1-oxyl, 2,2,6,6-tetramethyl-4-phenoxypiperidine-1-oxyl, 2,2,6,6-tetramethyl-4-benzylpiperidine-1-oxyl, 2,2,6,6-tetramethyl-4-acryloyloxypiperidine-1-oxyl, 2,2,6,6-tetramethyl-4-methacryloyloxypiperidine-1-oxyl, 2,2,6,6-tetramethyl-4-benzyloxypiperidine-1-oxyl, 2,2,6,6-tetramethyl-4-cinnamoyloxypiperidine-1-oxyl, 2,2,6,6-tetramethyl-4-acetylaminopiperidine-1-oxyl, 2,2,6,6-tetramethyl-4-acryloylaminopiperidine-1-oxyl, 2,2,6,6-tetramethyl-4-methacryloylaminopiperidine-1-oxyl, 2,2,6,6-tetramethyl-4-benzoylaminopiperidine-1-oxyl, 2,2,6,6-tetramethyl-4-cinnamoylaminopiperidine-1-oxyl, 4-propionyloxy-2,2,6,6-tetramethylpiperidine-N-oxyl, 4-methoxy-2,2,6,6-tetramethylpiperidine-N-oxyl, 4-ethoxy-2,2,6,6-tetramethylpiperidine-N-oxyl, 4-acetamido-2,2,6,6-tetramethylpiperidine-N-oxyl, 4-oxo-2,2,6,6-tetramethylpiperidine-N-oxyl, 2,2,4,4-tetramethylazetidine-1-oxyl, 2,2-dimethyl-4,4-dipropylazetidine-1-oxyl, 2,2,5,5-tetramethylpyrrolidine-N-oxyl, 2,2,5,5-tetramethyl-3-oxopyrrolidine-1-oxyl, 2,2,6,6-tetramethyl-4-acetoxypiperidine-1-oxyl, di-tert-butylamine-N-oxyl and poly[(6-[1,1,3,3-tetramethylbutyl]amino)-s-triazine-2,4-diyl] [(2,2,6,6-tetramethyl-4-piperidyl)imino]hexamethylene[(2,2,6,6-tetramethyl-4-piperidyl)imino], etc. can be used as the N-oxyl.

Although the usage amount of the N-oxyl is not particularly limited, it is as small as that of a catalyst generally used. It is normally in the range of 0.1-10 % by weight and preferably in the range of 0.5-5 % by weight with respect to the amount of the raw material of celluloses which is to be oxidized.

Any oxidant which promotes the oxidation reaction, for example, halogens such as bromine, chlorine and iodine etc., hypohalous acids, halous acids, perhalogen acids (such as perchloric acid and periodic acid, etc.), their salts, halogen oxides, nitrogen oxides and peroxides, etc. can be used as the oxidant.

The usage amount of the oxidant is preferably in the range of 1-100 % by weight, more preferably in the range of 5-50 % by weight, with respect to that of a solid content of the raw material of celluloses which are to be oxidized.

An alkaline metal bromide such as sodium bromide, etc. is an example of the bromide.

An alkaline metal iodide such as sodium iodide, etc. is an example of the iodide.

The amount of the bromide and iodide used as the oxidant is not particularly limited as long as they promote the oxidation reaction. It is normally in the range of 0-100 % by weight and preferably in the range of 5-50 % by weight with respect to that of a solid content of the raw material of celluloses which are to be oxidized.

The reaction condition for the TEMPO oxidation is not particularly limited and can be appropriately determined considering a desirable amount of carboxy groups in the resultant celluloses, desirable average fiber width, average fiber length, transparency and viscosity of the resultant celluloses.

It is preferable that the reaction is performed at a temperature of 50 °C or lower (more preferably 30 °C or lower, and even more preferably 20 °C or lower) in viewpoints of improving oxidation selectivity to primary hydroxyl groups and inhibiting side reactions.

Although the reaction time depends on the temperature, it is ordinarily in the range of 0.5-6 hours.

It is preferable that the pH is maintained in the range of 4-11 in the oxidation reaction system. Especially in the case where a hypochlorous acid salt is used as the oxidant, it is preferable that the pH is in the range of 8-11 (more preferably in the range of 9-11, particularly 9.5-10.5). While there is a concern that the cellulose may decompose into small molecules when the pH is higher than 11, it is worrisome that the hypochlorous acid decomposes to produce chlorine gas when the pH is in the acidic region.

In this specification, the pH refers to that at 25 °C.

The pH condition can be controlled by adding an alkali such as sodium hydroxide, potassium hydroxide, lithium hydroxide, ammonia water and organic alkalis, etc. if necessary.

It is possible to stop the oxidation reaction by adding an alcohol such as ethanol, etc. to the reaction system.

In addition, it is possible to control the amount of carboxy groups introduced by the oxidation reaction by controlling the additive amount of the alkali and/or by controlling the temperature and reaction time for the oxidation reaction.

In the case where the temperature and the reaction time are fixed, because the amount of carboxy groups has a correlation with the additive amount of the alkali, a method of adding the alkali to the reaction system while monitoring its consumption by the oxidation is particularly useful.

After the oxidation reaction, an acid may be added to the reaction system to neutralize if necessary. The oxidized celluloses in the reaction system after the oxidation reaction have carboxy groups in the base type (-COO-). The carboxy groups are converted into the acid type by the neutralization. The oxidized celluloses in the base type have a high level of water absorbability and thus easily swell, which causes a degradation of gas barrier properties. Thus, it is preferable that the oxidized celluloses are transformed from the base type to the acid type (-COOH) by the neutralization.

Any acid which makes it possible to convert the carboxy groups in the oxidized celluloses from the base type to the acid type can be used as the acid for the neutralization. The examples are hydrochloric acid and sulfuric acid, etc., and the hydrochloric acid is preferable considering safety and availability. Even after the carboxy groups has been converted into the acid once, it is easy to reconvert them into the base type by adding a hydroxide solution of an alkali metal, alkaline-earth metal, ammonia and organic alkali, etc.

Examples of the organic alkali are organic onium compounds which have a hydroxyl ion as the counter-ion, for instance, amines such as various kinds of aliphatic amine, aromatic amine and diamine, etc., ammonium hydroxides represented by $NR_4OH$ (wherein R is an alkyl group, a benzyl group, a phenyl group or a hydroxylalkyl group. All of the four "R"s may be the same group but are not necessarily the same, and each of R may also be different.) such as tetramethylammonium hydroxide, tetraethylammonium hydroxide, tetra-n-butylammonium hydroxide, benzyltrimethylammonium hydroxide and 2-hydroxyethyltrimethylammonium hydroxide etc., phosphonium hydroxides such as tetraethylphosphonium hydroxide, etc., oxonium hydroxides and sulfonium hydroxides, etc.

Although the reaction system liquid after the oxidation treatment or the neutralization treatment could be used for preparing the nanofiber dispersion liquid as it is, it is preferable that purification for removing the catalyst and impurities is performed. Purification is performed, for example, in such a way that the oxidized celluloses are collected by a filtration, etc. and rinsed with a cleaning liquid such as water, etc. Aqueous liquids such as water and hydrochloric acid, etc. are preferably used as the cleaning liquid.

In addition, the reaction system liquid or the oxidized celluloses after the purification may also receive a drying treatment.

The nanofiber dispersion liquid is an aqueous dispersion liquid in which the cellulose nanofiber is dispersed in an aqueous medium.

Water and a solvent mixture of water and an organic solvent are examples of the aqueous medium. Any organic solvent which uniformly blends in together with water can be used as the organic solvent, and its examples are alcohols such as ethanol, methanol, isopropanol and tert-butanol, etc., ethers and ketones, etc. themselves and solvent mixtures among any two or more of them. Water is preferably used as the aqueous medium.

It is preferable that the nanofiber dispersion liquid has a pH of 4-11, preferably 4-9, more preferably 4-8, and still more preferably 4-6. If the nanofiber dispersion liquid has such a pH, the hydrolysis of the silane coupling agent and the condensation reaction proceeds well, and the adhesiveness, gas barrier properties and waterproofness of the product are improved. Particularly in the case where tetraalkoxysilane is used as the silane coupling agent, since the tetraalkoxysilane is preferably hydrolyzed at pH of 2-4 before adding to the nanofiber dispersion liquid, it is possible to moderate a pH alteration of the nanofiber dispersion liquid when the hydrolysate (pH of 2-4) is added so that an agglutination caused by uneven condensation of the hydrolysate is prevented and a high level of gas barrier properties is achieved.

It is possible to control the pH by adding alkali such as sodium hydroxide and potassium hydroxide, etc. or acid such as hydrochloric acid, nitric acid, acetic acid and citric acid, etc. if necessary.

It is preferable that the nanofiber dispersion liquid has 5 % by weight or less of a solid content concentration of cellulose nanofiber, and more preferably 3 % by weight or less thereof. When the solid content is 5 % or less, particularly 3 % or less, a high level of dispersiveness and transparency is obtained. There is no lower limit with respect to the solid content as long as it is higher than 0 % by weight.

It is possible to prepare the nanofiber dispersion liquid, for example, in such a way that an aqueous liquid is prepared by adding an aqueous medium to a cellulose nanofiber precursor (or pre-product) such as the oxidized celluloses obtained by the TEMPO oxidation treatment, and then, after pH adjustment, if necessary, a fiberization treatment (transformation into the nanofiber) is performed.

The examples of the aqueous medium are the same as those previously presented. Water is preferable.

The pH adjustment can be performed by adding alkali or acid previously described.

There is no limitation to the pH of the aqueous liquid before performing the fiberization treatment as long as the pH after the fiberization treatment can be adjusted to the desirable value (that is, the pH previously described as to the nanofiber dispersion liquid).

The fiberization treatment can be performed by a mechanical process using a blender, high-speed homoblender, ultrasonic homogenizer, low-pressure homogenizer, high-pressure homogenizer, high-speed rotating blender, grinder, attritor, frost shattering, media mill or ball mill, etc. The fiberization treatment can also be performed by combining a plurality of these. The time required for the fiberization treatment depends on the process(es) it employs. Transparency becomes higher as the fiberization (transformation into nanofibers) proceeds because the fiber width becomes smaller.

The pH may decline by the fiberization treatment. A pH adjustment is performed after the fiberization treatment if necessary.

In the case where the resultant liquid has a desirable pH value, the resultant liquid can be used as the nanofiber dispersion liquid as it is.

Electrostatic repulsion forces between the carboxy groups introduced by the oxidation treatment are utilized in the fiberization treatment described above. In particular, the carboxy groups in the base type (-COO-) are conventionally used because they are more effective for dispersing the nanofibers than the carboxy groups in the acid type (-COOH). The cellulose nanofibers with the carboxy groups in the base type, however, have higher water absorbability, and thus, the cellulose nanofibers easily swell with water resulting in a decrease of gas barrier properties. It is preferable that the cellulose nanofibers with the carboxy groups in the acid type are obtained if possible from a viewpoint of achieving gas barrier properties under a high humidity condition, which is one of the objects of the present invention. Accordingly, cellulose nanofibers having 2-4 mmol/g of carboxy groups, a greater amount of carboxy groups than conventional cellulose nanofibers, may be used in the present invention. In the case where the amount of the carboxy groups is in this range, it is possible to fiberize the celluloses into nanofibers by adding no cation as counter-ion (or by adding only a tiny amount).

In the base type, the carboxy groups make a pair with cations as the counter-ion. Lithium ion, sodium ion, potassium ion, calcium ion, magnesium ion and ammonium ion can be used as cations. It is possible to transform the oxidized celluloses in the acid type into the base type by adding hydroxide solution of any of the cations above to the water solution or water/alcohol blend solution of the oxidized celluloses. A solution of a combination of two or more of the cations above can also be used. Among these, if lithium ion is used, it becomes possible to prevent the oxidized celluloses from swelling with water. Since the solution (or, the aqueous liquid) shows an alkaline pH when many of the carboxy groups in the oxidized celluloses are in the base type, it is practically possible to control the types of the carboxy groups by altering the pH of the solution (or, the aqueous liquid).

<Aqueous dispersion liquid (a)>

In the case where the nanofiber dispersion liquid described above is used as the aqueous dispersion liquid (a), which contains a cellulose nanofiber, it is further preferable that the amount of the carboxy groups is in the range of 1.8-3.5 mmol/g in order to obtain a more even dispersion at a pH of 4-9 because the aqueous dispersion liquid (a) has a pH of 4-9 to blend together with the hydrolysis liquid (b), which has a pH of 2-4 and contains alkoxysilane.

The aqueous dispersion liquid (a) has a pH of 4-9, preferably 4-8, and more preferably 4-6.

It is difficult to provide sufficient gas barrier properties with the cellulose nanofiber by simply adding an alkoxysilane or its hydrolysates. In other words, in the case where a film is formed with a cellulose nanofiber, while the cellulose nanofiber is dispersed in an aqueous medium such as water, etc. and used as a dispersion liquid, the dispersion liquid usually has an alkaline pH of 10 or higher because the cellulose nanofiber unstably disperses and agglutinates (or clumps together) to produce a gel under a condition of lower pH. On the other hand, it is necessary to hydrolyze an alkoxysilane under an acidic condition because under an alkaline condition, a condensation reaction of an alkoxysilane or its hydrolysates drastically proceeds, resulting in an occurrence of agglutination, which makes it difficult to achieve sufficient gas barrier properties.

Under a condition of pH as described above, it is possible to expose the alkoxysilane to a pH alteration more moderately than in the case of the other conditions. As a result, it is possible to prevent the occurrence of the agglutination so that a high level of gas barrier properties is achieved.

In addition, in the case of the pH described above, it is also possible to use a cellulose nanofiber having a greater amount of the carboxy groups than in the cellulose nanofiber previously described. In the case of the pH described above, it is preferable that the amount of the carboxy groups in the cellulose nanofiber is in the range of 2.0-4.0 mmol/g. It is undesirable if the amount of the carboxy groups is less than 1 mmol/g because then, it becomes impossible to sufficiently perform the fiberization, and cellulose nanofibers having a fiber width of 50 nm or less are not uniformly obtained in the aqueous liquid even if the cations are added in the dispersion process mentioned later. In addition, it is also undesirable if the amount of the carboxy groups is in the range of 1.0 mmol/g (inclusive) to 2.0 mmol/g (exclusive) because the gas barrier properties may degrade due to water absorption or water swell of the cellulose nanofiber, although it becomes possible to obtain cellulose nanofibers of 50 nm or less since more cations are added (than in the case where the amount of the carboxy groups is less than 1 mmol/g) in the dispersion process mentioned later. Furthermore, it also undesirable if the amount of the carboxy groups is more than 4.0 mmol/g because gas barrier properties and film strength would be insufficient since crystallinity of the cellulose nanofibers severely degrades.

On the other hand, if the amount of the carboxy groups is in the range of 2.0-4.0 mmol/g, it is possible to prevent the cellulose nanofibers from swelling with or absorbing water and to inhibit a degradation of gas barrier properties because the additive amount of the cations can be reduced. Particularly in the case of 2.5-4.0 mmol/g, it is possible to obtain a resultant film having a high level of waterproofness, transparency and crystallinity as well as dense structure and excellent strength because the cellulose nanofibers are fiberized to a sufficiently fine level even when no cations are added. Thus, it is possible to prevent a degradation of gas barrier properties under a high humidity condition.

The nanofibers having 2.0-4.0 mmol/g of the carboxy groups provide for the effect described above not only in the case where they are added to the aqueous dispersion liquid (a), which has a pH of 4-9 but also in the case where they are added to an aqueous dispersion liquid having a pH in another range. In other words, in the case where the amount of the carboxy groups contained in the cellulose nanofibers in an aqueous dispersion liquid is in the range of 2.0-4.0 mmol/g, it is possible to obtain a film having a high level of waterproofness, transparency and crystallinity as well as a dense structure and excellent strength so that a degradation of gas barrier properties under a high humidity condition can be prevented.

The amount of carboxy groups in the cellulose nanofiber can be measured as in the following procedure, for example.

After 100 ml of the aqueous dispersion liquid of cellulose nanofiber having 0.2 % by weight of a solid content concentration is prepared and the pH is adjusted to 3 by adding hydrochloric acid, the resultant liquid is conductometrically titrated with 0.5 N aqueous solution of sodium hydroxide. The conductometric titration is performed by using an automatic titrator (AUT-701, made by DKK-TOA Corporation) in such a way that the 0.5 N aqueous solution of sodium hydroxide is poured in drops of 0.05 ml/30 sec. and the electrical conductivity and pH are measured every 30 seconds. The titration is performed until the pH reaches 11. The amount of sodium hydroxide consumed for buffering action is determined from the resultant conductivity curve, and the amount of the carboxy groups is obtained by assigning the amount of sodium hydroxide ("A") to the following equation.

"Amount of carboxy groups (mmol/g)" = 0.5 × "A (ml)" / "Amount of cellulose nanofiber in a dry state (g)"

<Silane compounds>

Silane compounds specifically means a silane coupling agent mentioned below, alkoxysilane and their hydrolysates in this specification.

<Silane coupling agent>

In this specification, a silane coupling agent is a silane compound having at least two hydrolytic groups which are bonded to the silicon atom.

The hydrolytic groups are groups which produce hydroxyl groups by hydrolysis. The silane coupling agent would have silanol (Si-OH) groups by hydrolysis.

Examples of the hydrolytic group are an alkoxy group, an acetoxy group and a chlorine atom, etc. Among these, an alkoxy group is desirable. In other words, an alkoxysilane is desirable as the silane coupling agent. It is preferable that the alkyl group in the alkoxy group is an alkyl group having a carbon number of 1-5 (namely, one to five of carbon atom(s)), wherein an ethyl group is more preferable than a methyl group, and an ethyl group is particularly desirable.

The number of the hydrolytic groups contained in a single molecule of the silane coupling agent is from 2 to 4, preferably 3 or 4, and most preferably 3.

In the case where the number of the hydrolytic groups in the silane coupling agent is 2 or 3, it is preferable that the silane coupling agent further has a reactive group(s).

The reactive group(s) is able to make a chemical bonding (a covalent bonding) with or to interact (a hydrogen bonding) with a group(s) presented on a surface of the cellulose nanofiber or the substrate (a carboxy group and/or a hydroxyl group, etc.) and is an amino group.

The composition for forming a film comprises at least a silane coupling agent having an amino group as the reactive group.

It is preferable that the nanofiber dispersion liquid has a pH in the neutral to alkaline region because in the case of a pH in the acidic region, dispersion stability of the cellulose nanofiber degrades and agglutination may occur. However, in the case where for example a tetraalkoxysilane is used, since the most appropriate pH for its hydrolysis is in the acidic region and its hydrolysis proceeds at a drastically rapid rate in a neutral to alkaline region possibly resulting in the agglutination, it is necessary to arrange a process of hydrolyzing the tetraalkoxysilane before it is added to the nanofiber dispersion liquid. Therefore, at least a silane coupling agent having an amino group is used. This is because the agglutination hardly occurs even when it is added to the nanofiber dispersion liquid without performing the hydrolysis in advance since the most appropriate pH for its hydrolysis is in the neutral to slightly alkaline region.

In addition, the amino group is superior in terms of reactivity with a carboxy group on the surface of the cellulose nanofiber. As a result, it provides for sufficient effects of improving adhesiveness and gas barrier properties with a less additive amount than in the case where a tetraalkoxysilane, for example, is used. In addition, it improves waterproofness of the resultant film and provides the film with a high level of gas barrier properties even under a high humidity condition. These effects are particularly remarkable in the case where an inorganic layered compound mentioned later is added.

The reactive group may be directly or indirectly (via an intervening group) bonded to the silicon atom.

Examples of the intervening group are an arylene group and an alkylene group which allows an -NH- to intervene, etc. An alkylene group which allows an -NH- to intervene is particularly desirable.

Although any of linear alkylene, branched alkylene and cyclic alkylene can be used as the alkylene, a linear alkylene or a branched alkylene are preferable and a linear alkylene is more preferable. The carbon number (number of the carbon atoms) of the alkylene is preferably 1-15, more preferably 1-9 and even more preferably 1-6. The greater the carbon number, the higher the level of waterproofness the film has. It seems that this is because the intervening group reduces affinity for water. On the other hand, the smaller the carbon number, the higher the level of adhesiveness and gas barrier properties the film has.

For example, a phenylene group can be used as the arylene group.

Since the reactive group provides for a high effect of the present invention, it is preferable that the reactive group is bonded to the silicon atom via an intervening group, and particularly preferable that it is bonded to the silicon atom via an alkylene group which allows an -NH- to intervene.

It is preferable that one or two reactive group(s) is (are) included in a single molecule of the silane coupling agent, and particularly preferable that one reactive group is included. Other reactive groups include a vinyl group, an epoxy group, a methacryloxy group, an acryloxy group.

The silicon atom in a molecule of the silane coupling agent may also have a chemical bonding to a group other than the hydrolytic group and the reactive group. Examples of such a group are an alkyl group, an aryl group and a hydrogen atom, etc. An alkyl group with a carbon number of 1-6 is preferable as the alkyl group. A phenyl group, for example, is preferable as the aryl group.

For example, compounds denoted generally $(A-L)_n-Si(OR)_{4-n}$, wherein R is an alkyl group, A is either a reactive group or a hydrogen atom, L is a single bond, an arylene group or an alkylene group which allows an -NH- to intervene, and n is an integer in the range of 0-2, can be preferably used as the silane coupling agent.

The same group as is recited as the alkyl group contained in the alkoxy group can be used as the alkyl group represented by R in this chemical formula.

Each of the groups represented by R in this chemical formula are not necessarily identical but might be identical.

The same group as is previously described can be used as the reactive group represented by A in this chemical formula..

The same group as is recited in the previous description in terms of the intervening group can be used as the alkylene group or the arylene group represented by L in this chemical formula. If A is a reactive group, $-(CH_2)_x-$ or $-(CH_2)_y-NH-(CH_2)_z-$ are preferably used as L, wherein x is an integer in the range 1-15 and preferably 1-9, y is an integer in the range 1-8 and preferably 1-4, and z is an integer in the range 1-8 and preferably 1-4.

In the case where n is 2, each A and each L in this chemical formula are not necessarily identical but might be identical, respectively.

It is preferable that n is 0 or 1, with 1 being particularly preferable.

Among these, it is preferable that n is either 0 or 1, and A is a reactive group, which is particularly an amino group.

Examples of the compounds in the case where n is 0, namely a tetraalkoxysilane, are tetramethoxysilane, tetraethoxysilane, tetraisopropoxysilane, tetra-n-propoxysilane, tetra-n-butoxysilane, tetra-sec-butoxysilane and tetra-tert-butoxysilane, etc. Among these, tetraethoxysilane (TEOS) is preferably used.

Examples of the compounds in the case where n is 1 and A is an amino group, are 3-aminopropyltrimethoxysilane, 3-aminopropyltriethoxysilane, 3-(2-aminoethylamino)propyltrimethoxysilane, and 3-(2-aminoethylamino)propyltriethoxysilane, etc. Among these, 3-aminopropyltriethoxysilane and 3-(2-aminoethylamino)propyltriethoxysilane are preferably used.

A single and a plurality of silane coupling agent(s) may be added to the composition for forming a film. For example, while only a silane coupling agent having a reactive group, i.e. an amino group, can be used, it is also possible to use the silane coupling agent having a reactive group, i.e. an amino group, concomitantly with another silane coupling agent such as tetraalkoxysilane.

The additive amount of the silane coupling agent in the composition for forming a film can be adequately determined in accordance with its type. It is preferable that the amount is 0.5-150 % by weight, more preferably 0.5-100 % by weight with respect to the amount of cellulose nanofiber (solid content).

Particularly in the case where the silane coupling agent having a reactive group, i.e an amino group, is used, it is further preferable if the additive amount is 0.5-30 % by weight with respect to the cellulose nanofiber, and particularly desirable if the amount is 1-10 % by weight. If the additive amount exceeds 30 % by weight, the gas barrier properties may be degraded particularly in the case where an inorganic layered compound is concomitantly used although the adhesiveness may be retained.

In this specification, the additive amount of the silane coupling agent is presented in terms of $SiO_2$ (the amount of equivalent $SiO_2$). The additive amount of tetraalkoxysilane indicates a total amount of tetraalkoxysilane and its derived component, which includes the hydrolysates and condensation products of tetraalkoxysilane other than the tetraalkoxysilane.

The additive amount of the silane coupling agents other than the tetraalkoxysilane indicates its amount as a compound itself.

The silane coupling agent can be added such that it is directly adding to the nanofiber dispersion liquid or that it is preliminarily dispersed in an aqueous medium such as water, etc. followed by adding the aqueous medium to the nanofiber dispersion liquid.

Particularly in the case where tetraalkoxysilane is added, it is preferable that it is preliminarily hydrolyzed in an aqueous medium and is added as a hydrolysis liquid containing the hydrolysates.

The hydrolysis liquid can be prepared by hydrolyzing the tetraalkoxysilane by a conventional method, for example, in such a way that the tetraalkoxysilane is dissolved in an alcohol such as methanol, etc. followed by adding an acidic aqueous solution such as hydrochloric acid, etc. to perform the hydrolysis.

The alcohol usage is preferably 5-90 % by weight with respect to a total resultant hydrolysis liquid, more preferably 30-50 % by weight.

The reaction system preferably has a pH of 2-4, and more preferably has a pH of 3-4 during the hydrolysis reaction. If the pH is lower than 2, the cellulose nanofibers may agglutinate or clump together when blended with the nanofiber dispersion liquid. If the pH is higher than 4, the alkoxysilane may agglutinate or clump together and gas barrier properties of the resultant film may degrade. It becomes possible to obtain a nanofiber dispersion liquid in which both the cellulose nanofiber and the alkoxysilane evenly disperse and no agglutination occurs if the reaction system has a pH of 2-4 during the hydrolysis reaction. As a result, not only the dispersion liquid becomes more stable but also gas barrier properties of the resultant film obtained by coating the dispersion liquid are improved.

The pH can be controlled with a concentration of the acidic aqueous solution which is added to the reaction system.

It is preferable that the hydrolysis reaction is performed at a temperature of 25 °C or lower. There is no lower limit to the reaction temperature as long as the hydrolysis proceeds.

The reaction time is preferably 30 minutes or longer, more preferably 2 hours or longer although it depends on the situation. The longer the reaction time, the more uniformly the alkoxysilane is hydrolyzed. If the alkoxysilane is uniformly hydrolyzed, it becomes possible to obtain a nanofiber dispersion liquid in which both the cellulose nanofiber and the alkoxysilane evenly disperse and no agglutination occurs when the hydrolysis liquid is blended together with the dispersion liquid of the cellulose nanofiber. As a result, not only the dispersion liquid becomes more stable but also gas barrier properties of the resultant film obtained by coating the dispersion liquid are improved.

The resultant hydrolysis liquid receives a pH control if necessary.

The hydrolysis liquid preferably has a pH of 2-4, and more preferably has a pH of 3-4.

It is possible to control the pH by adding an alkali or an acid as mentioned above.

In addition, a concentration of the tetraalkoxysilane (in terms of $SiO_2$) in the hydrolysis liquid may also be controlled by adding the aqueous medium to the hydrolysis liquid if necessary.

The concentration of the tetraalkoxysilane (in terms of $SiO_2$) is a concentration of components which are derived from the tetraalkoxysilane present in the hydrolysis liquid and are quantified in terms of $SiO_2$. Besides the hydrolysates, raw (unreacted) tetraalkoxysilane and its condensation products, etc. are included in the components. The concentration is calculated from an amount of the tetraalkoxysilane used in preparing the hydrolysis liquid.

The concentration of tetraalkoxysilane (in terms of $SiO_2$) in the hydrolysis liquid is preferably 10 % by weight or lower, and more preferably 3 % by weight or lower. The lower the concentration, the less pH alteration occurs when the liquid is added to the nanofiber dispersion liquid so that it is possible to prevent the tetraalkoxysilane and its hydrolysates from agglutinating (or clumping together) and to obtain a nanofiber dispersion liquid in which both the cellulose nanofiber and the tetraalkoxysilane are evenly dispersed. As a result, not only the dispersion liquid becomes more stable but also gas barrier properties of the resultant film obtained by coating the dispersion liquid are improved. There is no specific lower limit to the concentration as long as it is more than 0 % by weight.

Examples of the aqueous medium are the same as those previously described. Water is preferably used as the aqueous medium.

<Hydrolysis liquid (b)>

The hydrolysis liquid (b) contains hydrolyzed alkoxysilane and has a pH of 2-4. The pH range is preferably 3-4.

For example, compounds denoted generally $A_nSi(OR)_{4-n}$, wherein R is an alkyl group, A is either a hydrogen atom or a non-hydrolyzable organic group, and n is an integer in the range of 0-2, are used as the alkoxysilane.

The alkyl group R in this chemical formula preferably has a carbon number of 1-5, desirably is either a methyl group or an ethyl group, and more desirably is an ethyl group.

Each of the groups represented by R in this chemical formula is not necessarily identical but might be identical.

There is no limitation to the non-hydrolyzable organic group of A. Examples of the non-hydrolyzable organic group are an alkyl group, an aryl group and a group in which a reactive group is combined to the alkyl group or the aryl group, etc. The same groups as groups generally used, in a silane coupling agent, as a group which an organic group bonded to the silicon atom has can be used as the reactive group here. Specific examples are a vinyl group, an epoxy group, a methacryloxy group, an acryloxy group, an amino group, an ureido group, a mercapto group, a chlorine atom and an isocyanate group, etc..

An alkyl group and a hydrogen atom are preferably used as A. The alkyl group preferably has a carbon number of 1-6.

In the case where n is 2, each of the groups represented by A in this chemical formula is not necessarily identical but might be identical.

It is particularly preferable that n is 0 in terms of gas barrier properties.

Examples of the compounds in the case where n is 0 in the chemical formula $A_nSi(OR)_{4-n}$, namely a tetraalkoxysilane, are tetramethoxysilane, tetraethoxysilane, tetraisopropoxysilane, tetra-n-propoxysilane, tetra-n-butoxysilane, tetra-sec-butoxysilane and tetra-tert-butoxysilane, etc. Among these, tetraethoxysilane (TEOS) is preferably used.

Examples of the compounds in the case where n is 1, namely trialkoxysilane, are methyltrimethoxysilane, methyltriethoxysilane, methyltripropoxysilane, methyltributoxysilane and hexyltrimethoxysilane, etc.

Examples of the compounds in the case where n is 2, namely dialkoxysilane, are dimethyldimethoxysilane, dimethyldiethoxysilane, methyldimethoxysilane and methyldiethoxysilane, etc.

It is possible to prepare the hydrolysis liquid (b) by hydrolyzing alkoxysilane by a conventional method.

Any of a single alkoxysilane and a plurality of alkoxysilane can be used as the alkoxysilane.

It is possible to prepare the hydrolysis liquid (b) by, for example, dissolving the alkoxysilane in alcohol such as methanol, etc. followed by adding an acidic aqueous solution such as hydrochloric acid, etc. to promote the hydrolysis reaction.

The alcohol usage is preferably 5-90 % by weight, and more preferably 30-50 % by weight with respect to a total of the resultant hydrolysis liquid (b).

The reaction system preferably has a pH of 2-4, and more preferably has a pH of 3-4 during the hydrolysis reaction. If the pH is lower than 2, the cellulose nanofibers may agglutinate or clump together when blended with the aqueous dispersion liquid (a). If the pH is higher than 4, the alkoxysilane may agglutinate or clump together and the gas barrier properties may degrade. It becomes possible to obtain a nanofiber dispersion liquid in which both the cellulose nanofiber and the alkoxysilane evenly disperse and no agglutination occurs if the reaction system has a pH of 2-4 during the hydrolysis reaction. As a result, not only the dispersion liquid becomes more stable but also gas barrier properties of the resultant film obtained by coating the dispersion liquid are improved.

The pH can be controlled with a concentration of the acidic aqueous solution which is added to the reaction system.

It is preferable that the hydrolysis reaction is performed at a temperature of 25 °C or lower. There is no lower limit to the reaction temperature as long as the hydrolysis proceeds.

The reaction time is preferably 30 minutes or longer, more preferably 2 hours or longer although it depends on the situation. The longer the reaction time, the more uniformly the alkoxysilane is hydrolyzed. If the alkoxysilane is uniformly hydrolyzed, it becomes possible to obtain a nanofiber dispersion liquid in which both the cellulose nanofiber and the alkoxysilane evenly disperse and no agglutination occurs when the hydrolysis liquid is blended together with the dispersion liquid of the cellulose nanofiber. As a result, not only the dispersion liquid becomes more stable but also gas barrier properties of the resultant film obtained by coating the dispersion liquid are improved.

The resultant hydrolysis liquid receives a pH control if necessary. It is possible to control the pH by adding an alkali or an acid mentioned above.

In addition, a concentration of the alkoxysilane (in terms of $SiO_2$) in the hydrolysis liquid may also be controlled by adding the aqueous medium to the hydrolysis liquid if necessary.

The concentration of the alkoxysilane (in terms of $SiO_2$) is a concentration of components which are derived from the alkoxysilane present in the hydrolysis liquid and are quantified in terms of $SiO_2$. Besides the hydrolysates, raw (unreacted) alkoxysilane and its condensation products, etc. are included in the components. The concentration is calculated from an amount of the alkoxysilane used in preparing the hydrolysis liquid.

The concentration of alkoxysilane (in terms of $SiO_2$) in the hydrolysis liquid (b) is preferably 10 % by weight or lower, and more preferably 3 % by weight or lower. The lower the concentration, the less pH alteration occurs when the liquid is added to the aqueous dispersion liquid (a) so that it is possible to prevent the tetraalkoxysilane and its hydrolysates from agglutinating (or clumping together) and to obtain a nanofiber dispersion liquid in which both the cellulose nanofiber and the alkoxysilane are evenly dispersed. As a result, not only the dispersion liquid becomes more stable but also gas barrier properties of the resultant film obtained by coating the dispersion liquid are improved. There is no specific lower limit to the concentration as long as it is more than 0 % by weight.

Examples of the aqueous medium are the same as those previously described. Water is preferably used as the aqueous medium.

It is possible to prepare a composition for forming a film by blending the aqueous dispersion liquid (a) and the hydrolysis dispersion (b) in such a way that a weight ratio of "cellulose nanofiber" / "alkoxysilane (in terms of $SiO_2$)" is in the range from 0.1 to 5. The weight ratio of "cellulose nanofiber" / "alkoxysilane (in terms of $SiO_2$)" is preferably in the range from 0.1 to 5, and more preferably from 0.3 to 2. If the weight ratio of "cellulose nanofiber" / "alkoxysilane (in terms of $SiO_2$)" is higher than 5, gas barrier properties of the resultant film easily degrade under a condition of high humidity. On the other hand, if the weight ratio is lower than 0.1, the resultant film becomes brittle.

This blending is preferably performed in a way that the composition for forming a film has a pH of 4-6, more preferably a pH of 4-5.

The composition for forming a film preferably has a solid content concentration in the range of 0.1-5 by weight with respect to a total weight of the composition for forming a film, and more preferably in the range of 0.1-3 by weight.

The composition for forming a film preferably has an alkoxysilane (in terms of $SiO_2$) concentration in the range of 0.1-10 by weight with respect to a total weight of the composition for forming a film, and more preferably in the range of 0.1-5 by weight.

The alkoxysilane (in terms of $SiO_2$) concentration in the composition for forming a film is a concentration of components which are derived from the alkoxysilane present in the composition for forming a film and are quantified in terms of $SiO_2$, as is similar to the case of the concentration of alkoxysilane in the hydrolysis liquid. Besides the hydrolysates, raw (unreacted) alkoxysilane and its condensation products etc. are included in the components.

In the present invention, it is preferable that the composition for forming a film further contains an inorganic layered compound. Then, the adhesiveness to the substrate is further improved. In addition, the gas barrier properties, especially vapor impermeability under a high humidity condition in particular, are also improved.

The inorganic layered compound is a crystalline inorganic compound having a layer structure. There is no limitation to the inorganic layered compound in terms of its type, particle size and aspect ratio etc., and any inorganic layered compound can adequately be used depending on the purpose. The higher aspect ratio the inorganic layered compound has, the more preferably it is used when considering gas barrier properties, waterproofness and humidity resistance. Specifically, 5 or higher of the aspect ratio is preferable, and 10 or higher is more preferable. Although there is no upper limit in terms of the aspect ratio, it is normally sufficient if the inorganic layered compound has an aspect ratio about 20.

Examples of the inorganic layered compound are kaolinite, dickite, nacrite, halloysite, antigorite, chrysotile, pyrophyllite, montmorillonite, beidellite, hectorite, saponite, stevensite, tetrasililic mica, sodium taeniolite, muscovite (white mica), margarite, talc, vermiculite, phlogopite (bronze mica), xanthophyllite and chlorite, etc. Among these, montmorillonite is preferable in terms of dispersion stability in the composition and coating suitability of the composition.

The inorganic layered compound may be directly added to the composition for forming a film while it may also be added together with an aqueous medium such as water, etc. after it is dispersed therein.

In the case where the composition for forming a film contains an inorganic layered compound, the composition for forming a film preferably has a weight ratio between "cellulose nanofiber" / "inorganic layered compound" in the range of 99/1 to 30/70, and more preferably in the range of 99/1 to 50/50. The composition for forming a film having the weight ratio of 99/1 or lower sufficiently has the effect mentioned above. In the composition for forming a film having the weight ratio lower than 30/70, dispersiveness of the cellulose nanofiber may degrade.

The composition for forming a film may contain components other than those mentioned above if necessary unless they severely harm the effect of the present invention. There is no particular limitation to the other components, which can appropriately be selected from publicly known additives in accordance with the application of the resultant film, etc. Specific examples are a leveling agent, an antifoamer, a hydrosoluble polymer, a synthetic polymer, an inorganic particle, an organic particle, a lubricant, an antistat, an ultraviolet absorber, a dye, a pigment and a stabilizer, etc.

<Film sheet>

The film sheet of the present invention includes a film formed using the composition for forming a film, and the film contains a cellulose nanofiber and a component derived form a silane compound. Since the cellulose nanofiber and the component derived from a silane compound are evenly dispersed and do not agglutinate (or clump together) in the composition for forming a film, it is possible to form a film in which the cellulose nanofiber is evenly dispersed on a nanoscale when the composition is used.

A silane coupling agent, an alkoxysilane, their hydrolysates and their condensates, etc. are examples of the component derived from a silane compound. The component derived from a silane compound may react with the cellulose nanofiber and be in a complex compound therewith.

The film formed using the composition for forming a film may hereinafter be referred to as a "nanofiber film".

It is possible to form the nanofiber film by coating the composition for forming a film on a support medium and drying it.

As there is particularly no limitation to the coating method, any known method such as various coating methods and cast methods, etc. can be used. Any of gravure coating method, gravure reverse coating method, roll coating method, reverse roll coating method, micro gravure method, comma coating method, air knife coating method, bar coating method, Mayer bar coating method, dip coating, die coating and spray coating etc. can be used as the coating method.

Natural drying, air drying, hot-air drying, ultraviolet drying, heat roller drying and infrared irradiation etc. can be used as the drying method.

There is no limitation to a condition for the drying as long as the aqueous medium in the coated film is removed. However, the higher the drying temperature and the longer the drying time, the better gas barrier properties under a high humidity condition the resultant film tends to be provided with. From this point of view, the drying temperature is preferably 80 °C or higher, more preferably 150 °C or higher, and the drying time is preferably 3 minutes or longer, more preferably 10 minutes or longer.

The upper limit of the drying temperature can be appropriately determined by a concentration of solid content in the composition for forming a film, a type of the aqueous medium and the drying time, etc. It is preferable that the drying time is at most 180 minutes.

The nanofiber film preferably has a thickness (thickness after the drying) of 0.1-5 $\mu$m, and more preferably 0.1-1 $\mu$m. A thickness of more than 5 $\mu$m causes inferior flexibility, whereas convexities and concavities on the surface of the support medium may adversely affect the gas barrier properties of the resultant film when the thickness is less than 0.1 $\mu$m.

In addition, the resultant nanofiber film may be irradiated with ultraviolet (beams) (UV) and/or an electron beam (EB) in order to improve film strength and/or adhesiveness.

The film sheet of the present invention may be a single layer sheet made of the nanofiber film, otherwise the film sheet may be a multi-layered sheet, which includes a layer other than the nanofiber film (for example, a substrate layer mentioned later).

In the case where the film sheet is a single layer sheet, the film sheet can be obtained by peeling the support medium off the nanofiber film formed as described above.

In the case where the film sheet is a multi-layered sheet, which includes a layer(s) other than the nanofiber film, the nanofiber film can be directly formed on the other layer(s) by using it as the support medium described above. Otherwise, the nanofiber film formed as described above may be laminated on other layer(s) using or not using an adhesive.

In the film sheet of the present invention, the nanofiber film is preferably formed on a substrate because then the film sheet is improved in terms of sheet strength, gas barrier properties and formability.

As there is no limitation to the substrate, it is possible to select an appropriate substrate from a variety of generally used and sheeted substrates depending on the intended application. Examples of the substrate are papers, paper boards, biodegradable plastics such as polylactic acid (PLA) and poly(butyl succinate), (PBS) etc., polyolefin resins (such as polyethylene and polypropylene, etc.), polyester resins (such as poly(ethylene terephthalate) (PET), poly(butylene terephthalate) (PBT) and poly(ethylene naphthalate) (PEN), etc.), cellulose resins (such as triacetyl cellulose, diacetyl cellulose and cellophane, etc.), polyamide resins (such as nylon 6 and nylon 6,6, etc.), poly(vinyl chloride) resins, polyimide resins, polyvinylalcohol resins, polycarbonate resins and ethylenevinylalcohol resins, etc. along with copolymers of any combination of their constituent monomers.

Among these, papers, paper boards, biodegradable plastics such as polylactic acid (PLA) and poly(butyl succinate) (PBS), etc. and biomass derived materials such as biopolyethylene, etc. are preferably used since the cellulose nanofiber, which is derived from natural product, is the most advantageously utilized. Substrates made either from a paper or from polylactic acid are well known as substrates having low gas barrier properties and low adhesiveness. Nevertheless, biomass derived materials having high gas barrier properties and high adhesiveness can be obtained by laminating a cellulose nanofiber film on these substrates.

The substrate may contain a known additive such as antistatic agent, UV absorber, plasticizer, lubricant and colorant, etc.

The substrate may receive a surface treatment such as corona treatment, anchor coat treatment, plasma treatment, ozone treatment and flame treatment, etc. on the surface. The surface treatment improves adhesiveness to a layer such as the nanofiber film and a deposited layer mentioned later, etc., which are laminated on the surface of the substrate. The surface treatment is performed by a method generally known in the art.

The substrate has an appropriate thickness depending on the intended application of the resultant film sheet. For example, in the case where it is used as a wrapping and/or packaging material, the thickness is ordinarily in the range of 10-200 $\mu$m, and preferably in the range of 10-100 $\mu$m.

A deposited layer which is made from inorganic compounds may be formed on the surface of the substrate. Then, the gas barrier properties of the film are improved.

There is particularly no limitation to the inorganic compounds, and materials conventionally used for forming a deposited film in a gas barrier product, etc. can be used. Specifically, inorganic oxides such as aluminum oxide, magnesium oxide, silicon oxide and tin oxide, etc. are examples. While each of these inorganic oxides can be used solely, two or more of these can concomitantly be used as well.

Among these, one oxide selected from aluminum oxide, magnesium oxide and silicon oxide is preferably used, and either magnesium oxide or silicon oxide is more preferably used.

The most preferable thickness of the deposited layer depends on the inorganic compounds and the layer's structure. It is generally in the range of a few nm to 500 nm, and preferably 5-300 nm. It should appropriately be determined considering a required level of gas barrier properties. In the case where the thickness of the deposited layer is excessively thin, the deposited film cannot retain continuity whereas in the case where the deposited layer is excessively thick, the deposited layer may have low flexibility, may easily crack and thus lose sufficient gas barrier properties.

It is possible to form the deposited layer by a conventional method such as the vacuum deposition method, sputtering method and plasma-enhanced vapor deposition method (CVD method), etc.

In the case where the deposited layer is formed on a substrate, it is preferable that the surface treatment previously described is performed on the surface of the substrate in advance. In such a case, the anchor coat treatment is desirable as surface treatment.

It is also possible to use a commercially available film on which a deposited layer is preliminarily formed.

In the case where the deposited layer is formed on one of the surfaces of the substrate, the nanofiber film can be laminated on the deposited layer although it can otherwise be laminated on the opposite surface of the substrate from the deposited layer. The nanofiber film is preferably laminated on the deposited layer in terms of printing suitability and bending performance, etc.

In addition, the film sheet of the present invention preferably has a thermoplastic resin layer which makes it possible to weld (or adhere by heat). Such a film sheet is useful as a wrapping and/or packaging material since it can be used for fabrication and sealing, etc. by heat.

For example, polypropylene films such as cast (or non-oriented) polypropylene (CPP), etc. and polyethylene films such as low density polyethylene (LDPE) and linear low density polyethylene (LLDPE), etc. can be used as the thermoplastic resin layer which makes it possible to weld (or adhere by heat).

The thermoplastic layer is usually laminated on the nanofiber film by extrusion (molding) or via an adhesive layer.

Besides the layers above, a print layer and/or an intermediate film layer, etc. may also be arranged within the film sheet of the present invention, if necessary. Structural examples of the film sheets having such a layer(s) are shown in the following.

(a) "Thermoplastic layer (heat seal layer)" / "Adhesive layer (for laminating)" / "Nanofiber film (gas barrier layer)" / "Substrate".
(b) "Thermoplastic layer (heat seal layer)" / "Adhesive layer (for laminating)" / "Print layer" / "Nanofiber film (gas barrier layer)" / "Substrate".
(c) "Thermoplastic layer (heat seal layer)" / "Adhesive layer (for laminating)" / "Intermediate film layer" / "Adhesive layer (for laminating)" / "Nanofiber film (gas barrier layer)" / "Substrate".

The intermediate film layer is often arranged for the purpose of improving the pouch strength (when the film sheet is used as a sterile retort pouch or a boilable film package) to prevent the pouch or the film package from tearing or breaking. A film selected from a two-axially elongated (oriented) nylon film, a two-axially elongated (oriented) PET film and a two-axially elongated (oriented) polypropylene film is generally used as the intermediate film layer considering mechanical strength and thermal stability. Although the thickness of the intermediate film layer is determined according to the material and required quality, etc., it is generally in the range of 10-30 μm. It is possible to employ a dry lamination method in which the layer is pasted with an adhesive agent of a two-liquid curable urethane resin etc. as a method for laminating the intermediate film layer. In addition, in the case where a gas permeable material such as paper is used, it is possible to employ a wet lamination method using a hydrosoluble starch adhesive or an aqueous adhesive such as vinyl acetate emulsion.

The heat seal layer is arranged as a sealing layer for making a wrap pouch or sealed package, etc. For example, a film made from one of polyethylene, polypropylene, ethylene-vinyl acetate copolymer, ethylene-acrylic acid copolymer, ethylene-acrylic ester copolymer, poly(butylene succinate) and their metal-bridged resins is used as the heat seal layer. Although the thickness of the heat seal layer is determined according to its application, etc., it is generally in the range of 15-200 μm. It is possible to employ any conventional method as a method for laminating the heat seal layer although a dry lamination method in which a film for forming the heat seal layer is pasted with an adhesive agent such as two-liquid curable urethane resin, etc. is generally used.

A known adhesive agent such as that of acrylate, polyester, ethylene-vinyl acetate, urethane, vinyl chloride-vinyl acetate and chlorinated polypropylene, etc. can be used as the adhesive agent for the "adhesive layer for laminating". A conventional coating means can be used as a means for coating the adhesive agent for the "adhesive layer for laminating". For example, a roll coater, a reverse roll coater, a gravure coater, a micro gravure coater, a knife coater, a bar coater, a wire bar coater, a die coater and a dip coater, etc. can be used. It is preferable that 1-10 g/m$^2$ of the adhesive agent is coated.

The print layer is arranged when the film sheet is put in practical use as a wrap pouch or sealed package, etc. The print layer is formed with an ink in which various additives such as pigment, extender, plasticizer, siccative and stabilizer, etc. are added to a conventionally-used ink binder resin such as urethane resin, acrylate resin, nitrocellulose resin, rubber resin and vinyl chloride resin, etc., and is formed in a shape of letters or pictures, etc.

As is described above, it is possible to form a nanofiber film having a high level of adhesiveness to the substrate and good gas barrier properties by using the composition for forming a film of the present invention. In addition, the nanofiber film has a high level of waterproofness and hardly swells with water. Moreover, the nanofiber film is advantageous considering that it has a high level of transparency and heat resistance, it hardly expands with heat, it exerts little burden on the environment since it is made from cellulose nanofiber, and it has high mechanical strength (impact resistance and flexibility, etc.) and high crystallinity, etc.

Since the nanofiber film is excellent in terms of adhesiveness, waterproofness and gas barrier properties, a film sheet in which the nanofiber film is arranged on a substrate hardly loses adhesiveness due to water or moisture and, for example, sufficiently retains gas barrier properties even under a high humidity condition.

In addition, although a film made by hydrolysis of alkoxysilane and condensation reaction of the products has the problem of inflexibility and brittleness, it is possible to improve its flexibility by using cellulose nanofiber together with the alkoxysilane.

As a result, a film sheet of the present invention is useful as a gas barrier material.

The present invention is especially effective in the case where the nanofiber film is laminated on a substrate.

EXAMPLES

The present invention is described in detail below showing examples and comparative examples although the present invention is not limited to these.

Incidentally, the pH measurements in the examples below were performed at a temperature 25 °C using a pH meter "D-51T" made by Horiba, Ltd.

At first, an example in which a silane coupling agent was added as the silane compound is described.

<<Manufacture example 1: Preparing cellulose nanofiber dispersion liquid>>

30 g of softwood kraft pulp was immersed in 600 g of water, and then dispersed using a blender. After the dispersion, 0.3 g of TEMPO, preliminarily dissolved in 200 g of water, and 3 g of NaBr were added to the resultant pulp slurry and further diluted with water to obtain a 1400 mL solution in total as a reaction system. The reaction system was kept at 20 °C and pH 10 by adequately adding 1N HCl(aq). An aqueous solution at least containing 300 mmol sodium hypochlorite (= 10 mmol NaClO with respect to 1 g of the softwood kraft pulp) in all was added dropwise to the reaction system. Although the pH of the reaction system began to decrease after the drops of the NaClO(aq) were added, the pH was managed to be maintained to approximately 10 by adequately adding 0.5N NaOH(aq). Two hours after the addition of the NaClO(aq) began (when the concentration of NaOH was 2.5 mmol/g), 30 g of ethanol was added to terminate the reaction. The pH of the reaction system was decreased to 2 by adding 0.5N HCl(aq). The resultant oxidized pulp was filtered and repeatedly washed with 0.01N HCl(aq) or water.

It was found by the following measurement that the oxidized pulp had 1.6 mmol/g carboxy groups.

<Measuring carboxy group amount in oxidized pulp>

0.1 g (solid content weight) of oxidized pulp was dispersed in water by a concentration of 1 wt%, followed by adding HCl(aq) to adjust the pH to 3. Subsequently, the amount of the carboxy groups (mmol/g) was measured by conductometric titration with 0.5N NaOH(aq).

The oxidized pulp was dispersed in distilled water to obtain a solution with 1.0 wt% solid content concentration. After adding 1N NaOH(aq) to have a pH 8, the resultant solution was treated by an ultrasonic homogenizer to obtain a cellulose nanofiber (hereinafter simply called "nanofiber") dispersion liquid. The dispersion liquid was transparent and had a pH 6.

<<Manufacture example 2: Preparing TEOS hydrolysis liquid>>

44.8 g of tetraethoxysilane (TEOS) was dissolved in 36.4 g of methanol to prepare a methanol solution of TEOS. 44.8 g of 0.01N HCl(aq) was added dropwise to the methanol solution under stirring. The pH of the reaction system was adjusted to 3. The reaction system was stirred for 2 hours since the addition of HCl was started so that a hydrolysis liquid of 1 wt% (concentration in terms of $SiO_2$) TEOS was obtained.

<<Manufacture example 3: Preparing montmorillonite dispersion liquid>>

A montmorillonite dispersion liquid was prepared by adding ion-exchange water to montmorillonite ("Kunipia F" made by Kunimine Industries Co., Ltd.) so that the resultant solution had a solid content concentration of 1 wt%, followed by performing a dispersion treatment by an ultrasonic homogenizer.

<<Comparative example 1, Examples 1-5, 6-9, 11, 13-17, Comparative example 2 and Reference Examples 10, 12, and 18>>

A composition for forming a film was prepared by blending the nanofiber dispersion liquid, the montmorillonite dispersion liquid and the TEOS hydrolysis liquid, respectively prepared in the Manufacture examples 1-3 above, together with one compound (hereinafter, referred to as component (S).) selected from the compounds S1-S4 in such a way that a blend ratio among the nanofiber (solid content), montmorillonite (solid content), TEOS (in terms of $SiO_2$) and the component (S) was a ratio shown in Table 1A. A type of the component (S) in each of Comparative example 1, Examples 1-5, 6-9, 11, 13-17, Comparative example 2 and Reference Examples 10, 12, and 18 is shown in Table 1A.

S1: 3-aminopropyltriethoxysilane [$NH_2CH_2CH_2CH_2Si(OC_2H_5)_3$].
S2: "Sila-Ace S510" made by Chisso corporation (3-glycoxypropyltrimethoxysilane).
S3: 3-(2-aminoethylamino)propyltriethoxysilane [$NH_2CH_2CH_2NHCH_2CH_2CH_2Si(OC_2H_5)_3$].

S4: "Sila-Ace S710" made by Chisso corporation (3-methacryloxypropyltrimethoxysilane).

The resultant composition for forming a film was measured by each of the following aspects. The results are shown in Table 1B.

<Evaluating adhesiveness>

A 12 μm thick polyethylene terephthalate (PET) film having received a corona treatment on the surface was prepared for using as a substrate.

After coating on the corona treated surface of the substrate using a bar coater, the composition for forming a film was dried at 120 °C for 5 minutes so that a film (referred to as the "coating film") having a thickness of about 200 nm was formed. In other words, a laminate film in which the coating film having a thickness 200 nm was formed on the substrate was obtained.

A surface of the coating film was cut in a reticular pattern (total 100 pieces by 10 × 10) using a cross-cut guide equipment "CCJ-1" made by Cotec Corporation. Then, a cellotape® (cellulose adhesive tape) "CT24" made by Nichiban Co., Ltd. was pasted on the surface of the coating film to perform a peeling test thereof. After the pasted cellotape® was peeled off, the number of the surface pieces left on the coating film which were not removed together with the peeled cellotape® was counted. The result (the number of left pieces / total 100 pieces) is shown in Table 1B as the number of left pieces.

<Evaluating waterproofness (measurement of expansion ratio by swelling with water)>

The compositions for forming a film obtained in Comparative example 1, Examples 1-5, Comparative example 2 and Examples 6-9 and 13-17 and Reference Example 18 were respectively casted in a polystyrene container and dried at 50 °C for 18 hours to obtain 15 μm thick cast films.

The cast films were measured by weight (g), respectively, and subsequently were immersed in pure water. After each of the cast films was taken out from pure water and extra water left on the surface was removed, its weight (g) was again measured.

An expansion ratio of the cast film by swelling was calculated by the following formula using its weights before and after immersing in water. The lower the expansion ratio, the higher waterproofness it was supposed to have because swelling with water was more difficult.

"Expansion ratio by swelling with water" = "weight after immersing in water" / "weight before immersing in water"

<Evaluating gas barrier properties (measurement of oxygen permeability)>

The laminate films were obtained in the same way as in the case of the <Adhesiveness> described above except that the compositions for forming a film obtained in Comparative example 1, Examples 2-3, Comparative example 2 and Examples 6-17 and Reference Example 18 were used as the composition for forming a film.

The laminate films were measured by oxygen permeability (cm³/m²•day) under an atmosphere of 30 °C and 70 %RH using an oxygen permeation rate test system MOCON OX-TRAN 2/21 (made by Modern Controls, Inc.).

Table 1A

| | Blend ratio (by weight) | | | |
| --- | --- | --- | --- | --- |
| | Nanofiber | Montmorillonite | TEOS | Component (S) [type] |
| Comparative example 1 | 100 | - | - | - |
| Example 1 | 100 | - | - | 5 [S1] |
| Example 2 | 100 | - | - | 10 [S1] |
| Example 3 | 100 | - | - | 20 [S1] |
| Example 4 | 100 | - | - | 50 [S1] |
| Example 5 | 100 | - | - | 100 [S1] |

(continued)

| | Blend ratio (by weight) | | | |
|---|---|---|---|---|
| | Nanofiber | Montmorillonite | TEOS | Component (S) [type] |
| Comparative example 2 | 100 | 50 | - | - |
| Example 6 | 100 | 50 | - | 5 [S1] |
| Example 7 | 100 | 50 | - | 10 [S1] |
| Example 8 | 100 | 50 | - | 20 [S1] |
| Example 9 | 100 | 50 | - | 50 [S1] |
| Reference Example 10 | 50 | - | 50 | - |
| Example 11 | 50 | - | 47 | 3 [S1] |
| Reference Example 12 | 50 | - | 45 | 5 [S2] |
| Example 13 | 99 | - | - | 1 [S3] |
| Example 14 | 97 | - | - | 3 [S3] |
| Example 15 | 95 | - | - | 5 [S3] |
| Example 16 | 90 | - | - | 10 [S3] |
| Example 17 | 70 | - | - | 30 [S3] |
| Reference Example 18 | 98 | - | - | 2 [S4] |

Table 1B

| | Results | | |
|---|---|---|---|
| | Number of left pieces | Expansion ratio (by swelling with water) | Oxygen permeability at 30 °C and 70 %RH ($cm^3/m^2 \cdot day$) |
| Comparative example 1 | 0/100 | 11 | 145 |
| Example 1 | 20/100 | 5.9 | 118 |
| Example 2 | 30/100 | 3.9 | 118 |
| Example 3 | 100/100 | 3.3 | 120 |
| Example 4 | 100/100 | 2.7 | 130 |
| Example 5 | 100/100 | 1.9 | 132 |
| Comparative example 2 | 80/100 | 11.92 | 15 |
| Example 6 | 90/100 | 11.91 | 12 |
| Example 7 | 100/100 | 9.39 | 11.6 |
| Example 8 | 100/100 | 7.71 | 22.5 |
| Example 9 | 100/100 | 5.88 | 44.8 |
| Reference Example 10 | 97/100 | 1.5 | 6 |
| Example 11 | 100/100 | 1.4 | 10 |
| Reference Example 12 | 100/100 | 1.6 | 5 |
| Example 13 | 10/100 | 10.5 | 109 |

(continued)

|  | Results | | |
|---|---|---|---|
|  | Number of left pieces | Expansion ratio (by swelling with water) | Oxygen permeability at 30 °C and 70 %RH $(cm^3/m^2 \cdot day)$ |
| Example 14 | 50/100 | 5.1 | 114 |
| Example 15 | 90/100 | 3.4 | 116 |
| Example 16 | 100/100 | 2.8 | 126 |
| Example 17 | 100/100 | 1.6 | 130 |
| Reference Example 18 | 100/100 | 6.7 | 85 |

When comparing the results in Comparative example 1 and Examples 1-5, 6-9, 11, and 13-17 and Reference Examples 10, 12, and 18, the cases in which the blend ratios were the same except for the amount of TEOS and/or the component (S), it can be confirmed that the adhesiveness of the formed film to the substrate, along with the waterproofness and the oxygen gas barrier properties under an atmosphere of 30 °C and 70 %RH, was improved by adding TEOS and/or the component (S) to the nanofiber dispersion liquid.

In addition, the results in Examples 1-5, 6-9, 11, 13-17 and Reference Examples 10, 12, and 18 show that the addition of only small amounts of TEOS and/or the component (S), that is, a silane coupling agent in which a reactive group such as amino group, epoxy group and methacryloxy group etc. was bonded to the silicon atom via an alkylene group, provided the effects of improving adhesiveness, gas barrier properties and waterproofness etc. Among these, the effect of improving waterproofness was remarkable in Examples 1-5 and 14-17 and Reference Example 18, the cases in which 2 parts by weight or more of the component (S) was blended with respect to 100 parts by weight of cellulose nanofiber.

When comparing the results in Comparative example 2 and Examples 6-9, the cases in which the blend ratios were the same except for the amount of the component (S), it can be confirmed that the adhesiveness of the formed film to the substrate, along with the waterproofness was improved by adding the component (S) to the nanofiber dispersion liquid. The oxygen gas barrier properties were high in any of these cases since the oxygen permeability under an atmosphere of 30 °C and 70 %RH was lower than 50 $cm^3/m^2 \cdot day$. In particular, the oxygen permeability in Examples 6 and 7, the cases in which 10 parts by weight or more of the component (S) was blended with respect to 100 parts by weight of cellulose nanofiber, was lower than that in Comparative example 2.

When comparing the results in Examples 6-8 with those in Examples 1-3, the cases in which the blend ratios were the same except for the addition of montmorillonite, it can be confirmed that the adhesiveness of the formed film to the substrate, along with the oxygen gas barrier properties under an atmosphere of 30 °C and 70 %RH, was improved by the addition of montmorillonite.

<<Comparative example 3 and Examples 19 and 20 and Reference Example 21>>

Laminate films were obtained in the same way as in the case of the <Evaluating adhesiveness> in the <<Comparative example 1, Examples 1-5, 6-9, 11, 13-17, Comparative example 2 and Reference Examples 10, 12 and 18>> described above except that the compositions for forming a film in Comparative example 1, Examples 2, Example 7 and Reference Examples 10 were used as the composition for forming a film.

Three-layer laminates were fabricated by pasting a 70 $\mu$m thick polypropylene (PP) film on each of the laminate films by a dry lamination method using an urethanepolyol adhesive.

The three-layer laminates were measured by oxygen permeability $(cm^3/m^2 \cdot day)$ under an atmosphere of 30 °C and 70 %RH in the same way as is previously described in <<Comparative example 1, Examples 1-5, 6-9, 11, 13-17, Comparative example 2 and Reference Examples 10, 12, and 18>>. In addition, water vapor permeability and adhesion strength were measured in the following way. The results are shown in Table 2B.

<Measuring water vapor permeability>

The water vapor permeability $(g/m^2 \cdot day)$ was measured under an atmosphere of 40 °C and 90 %RH using a water vapor transmission rate test system PERMATRAN W-3/33 MG (made by Modern Controls, Inc.).

<Measuring adhesion strength>

A test piece was obtained by cutting each of the three-layer laminates in a strip of 10 mm width × 10 cm length. The adhesion strength between the PP film and the substrate was measured using the test piece by a T-form peeling test with a pulling rate 300 mm/min. in conformity to JIS (Japanese Industrial Standards)-K-7127.

<<Comparative example 4 and Examples 22-23>>

Three-layer laminates were obtained in the same way as in the case of the Example 19 described above except that the compositions for forming a film in Comparative example 1, Examples 2 and Example 7 were used as the composition for forming a film to form the coating film and a 25 μm thick poly(lactic acid) (PLA) film was used as the substrate so as to obtain the laminate films.
Each of the three-layer laminates received the same measurements as in the case of the Example 19. The results are shown in Table 2B.

<<Comparative example 5 and Examples 24-25>>

Three-layer laminates were obtained in the same way as in the case of the Example 19 described above except that the compositions for forming a film in Comparative example 1, Examples 2 and Example 7 were used as the composition for forming a film to form the coating film and a 70 μm thick paper (a coated paper with a basis weight 100 g/m$^2$) was used as the substrate so as to obtain the laminate films.
Each of the three-layer laminates received the same measurements as in the case of the Example 19. The results are shown in Table 2B.

<<Comparative example 6 and Examples 26 and Reference Example 27>>

Three-layer laminates were obtained in the same way as in the case of the Example 19 described above except that the compositions for forming a film in Comparative example 1, Examples 2 and Reference Example 10 were used as the composition for forming a film to form the coating film and a 12 μm thick PET film having a 40 nm-thick SiO$_x$-deposited layer on one of the surfaces was used as the substrate so as to obtain the laminate films.
Each of the three-layer laminates received the same measurements as in the case of the Example 19. The results are shown in Table 2B.

Table 2A

| | Components | |
| --- | --- | --- |
| | Substrate | Composition for forming a film |
| Comparative example 3 | PET | = Comparative example 1 |
| Example 19 | PET | = Example 2 |
| Example 20 | PET | = Example 7 |
| Reference Example 21 | PET | = Reference Example 10 |
| Comparative example 4 | PLA | = Comparative example 1 |
| Example 22 | PLA | = Example 2 |
| Example 23 | PLA | = Example 7 |
| Comparative example 5 | Paper | = Comparative example 1 |
| Example 24 | Paper | = Example 2 |
| Example 25 | Paper | = Example 7 |
| Comparative example 6 | PET with deposited layer | = Comparative example 1 |
| Example 26 | PET with deposited layer | = Example 2 |
| Reference Example 27 | PET with deposited layer | = Reference Example 10 |

Table 2B

| | | Results | | |
|---|---|---|---|---|
| | | Oxygen permeability at 30 °C and 70 %RH ($cm^3/m^2$•day) | Water vapor permeability at 40 °C and 90 %RH ($g/m^2$•day) | Adhesion strength (N/15mm) |
| | Comparative example 3 | 32 | 6 | 0.1 |
| | Example 19 | 12 | 5 | 2.1 |
| | Example 20 | 10 | 4 | 2.0 |
| | Reference Example 21 | 1.5 | 5 | 3.2 |
| | Comparative example 4 | 300 or higher | 10 | 0.1 |
| | Example 22 | 120 | 9 | 2.0 |
| | Example 23 | 28 | 5 | 2.0 |
| | Comparative example 5 | 55 | 10 | 0.6 |
| | Example 24 | 47 | 9 | So high that the substrate broke |
| | Example 25 | 7 | 5 | So high that the substrate broke |
| | Comparative example 6 | 0.5 | 1.4 | 2.0 |
| | Example 26 | 0.3 | 0.8 | 3.8 |
| | Reference Example 27 | 0.1 | 0.5 | 5.0 |

It can be confirmed in the results above that it is possible to more sufficiently keep gas barrier properties in a highly-humid environment and to improve the adhesiveness to the substrate by using the composition for forming a film of the present invention, the composition containing a silane coupling agent, than in the case where no silane coupling agent is used. It can be confirmed in the results above that a variety of three-layer laminates had 2 N/15mm or higher of adhesion strength to the substrates. The gas barrier properties were greatly improved particularly in the case where montmorillonite was blended.

Next, reference examples in which an alkoxysilane was blended as the silane compound are described.

Measuring methods or evaluation methods employed in the following examples are as follows.

<Measuring pH>

The pH measurements were performed at a temperature 25 °C using a pH meter "D-51T" made by Horiba, Ltd.

< Measuring carboxy group amount in oxidized pulp>

0.1 g (solid content weight) of oxidized pulp was dispersed in water by a concentration of 1 wt%, followed by adding HCl(aq) to adjust the pH to 3. Subsequently, the amount of the carboxy groups (mmol/g) was measure by conductometric titration with 0.5N NaOH(aq).

<Evaluating oxygen impermeability under a high humidity condition>

Oxygen permeability ($cm^3/m^2$•day) of the gas barrier films was measured under an atmosphere of 25 °C and 70 %RH using the oxygen permeation rate test system MOCON OX-TRAN 2/21 (made by Modern Controls, Inc.) so as to evaluate the oxygen impermeability (oxygen barrier properties) under a high humidity condition.

<Evaluating water vapor impermeability under a high humidity condition>

Water vapor permeability ($g/m^2 \cdot day$) of the gas barrier films was measured by a cup method in conformity to JIS (Japanese Industrial Standards) Z0208 under an atmosphere of 40 °C and 90 %RH so as to evaluate the water vapor impermeability (water vapor barrier properties) under a high humidity condition.

<<Manufacture example 4: Preparing aqueous dispersion liquid (a1)>>

30 g of softwood kraft pulp was immersed in 600 g of water, and then dispersed using a blender. After the dispersion, 0.3 g of TEMPO, preliminarily dissolved in 200 g of water, and 3 g of NaBr were added to the resultant pulp slurry and further diluted with water to obtain a 1400 mL solution in total as a reaction system. The reaction system was kept at 20 °C and pH 10 by adequately adding 1N HCl(aq). An aqueous solution at least containing 300 mmol sodium hypochlorite (= 10 mmol NaClO with respect to 1 g of the softwood kraft pulp) in all was added dropwise to the reaction system. Although the pH of the reaction system began to decrease after the NaClO(aq) was added by dripping, the pH was maintained approximately at 10 by adequately adding 0.5N NaOH(aq). Two hours after the addition of the NaClO(aq) began (when the concentration of NaOH was 2.5 mmol/g), 30 g of ethanol was added to terminate the reaction. The pH of the reaction system was decreased to 2 by adding 0.5N HCl(aq). The resultant oxidized pulp was filtered and repeatedly washed with 0.01N HCl(aq) or water. It was found that the oxidized pulp had 1.8 mmol/g carboxy groups.

The oxidized pulp was dispersed in an ion-exchange water to obtain a solution with 1.0 wt% solid content concentration. After adding 1N NaOH(aq) to have a pH 8, the resultant solution was treated by a high-speed rotating blender for 20 minutes to obtain an aqueous dispersion liquid (a1) of cellulose nanofiber. The aqueous dispersion liquid (a1) was transparent and had a pH 6.

<<Manufacture example 5: Preparing hydrolysis liquid (b1)>>

44.8 g of tetraethoxysilane (TEOS) was dissolved in 36.4 g of methanol to prepare a methanol solution of TEOS. 44.8 g of 0.01N HCl(aq) was added dropwise to the methanol solution under stirring. The pH of the reaction system was adjusted to 3. The reaction system was stirred for 2 hours since the addition of HCl was started so that a hydrolysis liquid (b1) of 1 wt% (concentration in terms of $SiO_2$) TEOS was obtained.

<<Manufacture example 6: Preparing hydrolysis liquid (b2)>>

A hydrolysis liquid (b2) having pH 2 was prepared in a way similar to the Manufacture example 5 except that the pH of the reaction system was adjusted to 2 by using 0.02N HCl(aq) instead of adjusting the pH to 3 by using 0.01N HCl(aq).

<<Manufacture example 7: Preparing hydrolysis liquid (b3)>>

Ion-exchange water was added to the hydrolysis liquid of TEOS obtained in the Manufacture example 5 to prepare a hydrolysis liquid (b3) having pH 3 and 20 wt% (in terms of $SiO_2$) of TEOS concentration.

<<Manufacture example 8: Preparing hydrolysis liquid (b4)>>

A hydrolysis liquid (b4) having pH 2 was prepared in a way similar to the Manufacture example 5 except that the pH of the reaction system was adjusted to 4.5 by using 0.0001N HCl(aq) instead of adjusting the pH to 3 by using 0.01N HCl(aq).

<<Manufacture example 9: Preparing montmorillonite dispersion liquid»

A montmorillonite dispersion liquid was prepared by adding ion-exchange water to montmorillonite ("Kunipia F" made by Kunimine Industries Co., Ltd.) so that the resultant solution had a solid content concentration of 1 wt%, followed by performing a dispersion treatment by an ultrasonic homogenizer.

<< Reference Examples 28-30>>

A coating liquid (composition for forming a gas barrier layer) was prepared by blending the aqueous dispersion liquid (a1), the hydrolysis liquid (b1) and the montmorillonite dispersion liquid, respectively prepared in the Manufacture examples 4, 5 and 9 above, in such a way that a blend ratio (by weight) among the cellulose nanofiber, TEOS (in terms of $SiO_2$) and montmorillonite was the ratio shown in Table 3.

The resultant coating liquid was coated on a 25 $\mu$m thick polyethylene terephthalate (PET) film by a bar coater (#50) followed by drying at 120 °C for 5 minutes so as to form a gas barrier layer having a thickness of about 250 nm. As a result, a gas barrier film having a gas barrier layer with a thickness of about 250 nm was obtained.

The gas barrier film was measured by oxygen permeability and water vapor permeability. The results are shown in Table 4.

<<Reference Example 31>>

A gas barrier film having a gas barrier layer with a thickness of about 250 nm was obtained in the same way as is in the Reference Example 28 described above except that the condition for drying was changed to 120 °C for 15 minutes.

The gas barrier film was measured by oxygen permeability and water vapor permeability. The results are shown in Table 4.

<<Reference Example 32>>

A gas barrier film having a gas barrier layer with a thickness of about 250 nm was obtained in the same way as is in the Reference Example 28 described above except that the condition for drying was changed to 150 °C for 5 minutes.

The gas barrier film was measured by oxygen permeability and water vapor permeability. The results are shown in Table 4.

<<Reference Example 33>>

A gas barrier film having a gas barrier layer with a thickness of about 250 nm was obtained in the same way as is in the Reference Example 28 described above except that the condition for drying was changed to 180 °C for 5 minutes.

The gas barrier film was measured by oxygen permeability and water vapor permeability. The results are shown in Table 4.

<<Reference Example 34>>

A gas barrier film having a gas barrier layer with a thickness of about 250 nm was obtained in the same way as is in the Reference Example 28 described above except that a deposition film (substrate: PET, deposited layer: $SiO_x$) in which a 400 nm thick deposited layer was formed on one of the surface of a 25 $\mu$m thick PET film was used instead of the raw PET film.

The coating liquid was coated on the deposited layer of the deposition film.

The gas barrier film was measured by oxygen permeability and water vapor permeability. The results are shown in Table 4.

<<Reference Example 35>>

A gas barrier film having a gas barrier layer with a thickness of about 250 nm was obtained in the same way as is in the Reference Example 28 described above except that a 70 $\mu$m thick paper (a coated paper) was used instead of the PET film.

The gas barrier film was measured by oxygen permeability. The results are shown in Table 4. Incidentally, water vapor permeability was not measured because not a PET film but a paper is employed as the substrate.

<<Reference Example 36>>

A gas barrier film having a gas barrier layer with a thickness of about 250 nm was obtained in the same way as is in the Reference Example 28 described above except that the hydrolysis liquid (b2) described in the Manufacture example 6 was blended instead of the hydrolysis liquid (b1) to employ a blend ratio (by weight) shown in Table 3 between the cellulose nanofiber and TEOS.

The gas barrier film was measured by oxygen permeability and water vapor permeability. The results are shown in Table 4.

<<Comparative example 7>>

A gas barrier film having a gas barrier layer with a thickness of about 250 nm was obtained in the same way as is in the Reference Example 28 described above except that the coating liquid was not prepared and the aqueous liquid (a1) was used instead of using the coating liquid.

The gas barrier film was measured by oxygen permeability and water vapor permeability. The results are shown in Table 4.

<<Comparative example 8>>

A gas barrier film having a gas barrier layer with a thickness of about 250 nm was obtained in the same way as is in the Reference Example 28 described above except that the hydrolysis liquid (b3) described in the Manufacture example 7 was blended instead of the hydrolysis liquid (b1) to employ a blend ratio (by weight) shown in Table 3 between the cellulose nanofiber and TEOS.

The gas barrier film was measured by oxygen permeability and water vapor permeability. The results are shown in Table 4.

<<Comparative example 9>>

A gas barrier film having a gas barrier layer with a thickness of about 250 nm was obtained in the same way as is in the Reference Example 28 described above except that the hydrolysis liquid (b4) described in the Manufacture example 8 was blended instead of the hydrolysis liquid (b1) to employ a blend ratio (by weight) shown in Table 3 between the cellulose nanofiber and TEOS.

The gas barrier film was measured by oxygen permeability and water vapor permeability. The results are shown in Table 4.

Table 3

| | Blend ratio (by weight) | | | Changes from Example 28 |
|---|---|---|---|---|
| | Cellulose nanofiber | TEOS (in terms of $SiO_2$) | Montmorillonite | |
| Reference Example 28 | 1 | 1 | 0 | - |
| Reference Example 29 | 1 | 2 | 0 | - |
| Reference Example 30 | 1 | 1 | 0.3 | - |
| Reference Example 31 | 1 | 1 | 0 | Drying at 120 °C for 15 min. |
| Reference Example 32 | 1 | 1 | 0 | Drying at 150 °C for 5 min. |
| Reference Example 33 | 1 | 1 | 0 | Drying at 180 °C for 5 min. |
| Reference Example 34 | 1 | 1 | 0 | Deposited film substrate |
| Reference Example 35 | 1 | 1 | 0 | Paper substrate |
| Reference Example 36 | 1 | 1 | 0 | Hydrolysis liquid (b2) |
| Comparative example 7 | 1 | 0 | 0 | - |
| Comparative example 8 | 1 | 0.05 | 0 | Hydrolysis liquid (b3) |
| Comparative example 9 | 1 | 1 | 0 | Hydrolysis liquid (b4) |

Table 4

| | Results | |
| --- | --- | --- |
| | Oxygen permeability at 25 °C and 70 %RH ($cm^3/m^2 \cdot day$) | Water vapor permeability at 40 °C and 90 %RH ($g/m^2 \cdot day$) |
| Reference Example 28 | 4.9 | 45 |
| Reference Example 29 | 2.5 | 45 |
| Reference Example 30 | 4 | 38 |
| Reference Example 31 | 2.5 | 43 |
| Reference Example 32 | 2.1 | 42 |
| Reference Example 33 | 1.5 | 40 |
| Reference Example 34 | 0.3 | 1.2 |
| Reference Example 35 | 28 | - |
| Reference Example 36 | 5.5 | 45 |
| Comparative example 7 | 98 | 50 |
| Comparative example 8 | 120 | 51 |
| Comparative example 9 | 110 | 50 |

As is shown in the Table 4 above, the gas barrier films of the Reference Examples 28-36 had a high level of oxygen gas barrier properties under a high humidity condition, specifically oxygen permeability lower than 30 $cm^3/m^2 \cdot day$, and this is remarkably lower than that of the film of the Comparative example 7, in which no TEOS hydrolysates were blended. Among these, the gas barrier films of the Reference Examples 28-34 and 36 also had a high level of water vapor barrier properties under a high humidity condition, specifically water vapor permeability lower than 45 $g/m^2 \cdot day$. The oxygen permeability and water vapor permeability were particularly low in the Reference Example 34, the case where a deposited film was employed as the substrate. In addition, the gas barrier films of the Reference Example 28-35 achieved a high level of flatness and smoothness on the surface on which the coating liquid was coated (= the surface of the gas barrier layer).

On the other hand, the films made in the Comparative example 7 (the case where no TEOS hydrolysates were blended), Comparative example 8 (the case where the weight ratio of the cellulose nanofiber to TEOS (in terms of $SiO_2$) was 20) and Comparative example 9 (the case where the hydrolysis liquid had a pH 4.5) had low gas barrier properties under a high humidity condition, and also lower water vapor barrier properties than that of the Reference Examples 28-36. Among these, it is noteworthy that the films of the Comparative examples 8 and 9 had oxygen gas barrier properties inferior to that of the Comparative example 7 in spite of the use of TEOS hydrolysates.

Next, examples in which the cellulose nanofiber had 50 nm or lower of average fiber width and contained 2.0-4.0 mmol/g of carboxy groups are described.

The cellulose nanofiber was manufactured by performing a TEMPO oxidation of cellulose followed by a dispersing treatment in the way described below.

«Manufacture example 10: Preparing cellulose nanofiber dispersion liquid»

<TEMPO oxidation of cellulose>

(Materials and/or chemicals)

Cellulose: bleached kraft pulp (Mackenzie, Fletcher Challenge Canada Ltd.).
TEMPO: commercial item (Tokyo Chemical Industry Co., Ltd.).
Sodium hypochlorite: commercial item (Wako Pure Chemical Industries, Ltd.).
Sodium bromide: commercial item (Wako Pure Chemical Industries, Ltd.).

(TEMPO oxidation)

10 g (dry weight) of the bleached kraft pulp was statically immersed in a 500 ml of water over night to swell with water. After this was kept at a temperature indicated in Table 5, 0.1 g of TEMPO and 1 g of sodium bromide were added so that pulp slurry was obtained. Subsequently, 100 mmol (= "10 mmol"/"1 g of cellulose") of sodium hypochlorite was add to the pulp slurry under stirring. At this time, NaOH(aq) having a concentration of about 1N was adequately added to retain a pH of about 10.5 in the pulp slurry. After a reaction was performed for a time presented in each condition in the Table 5, the pulp slurry was neutralized with 2N HCl(aq) and rinsed with water to obtain oxidized cellulose (acid type).

<Measuring carboxy group amount>

The carboxy group amount in the resultant oxidized cellulose was measured according to the method described previously in this specification. The results were shown in Table 6A.

<Dispersion treatment of oxidized cellulose>

A solution of the oxidized cellulose having 1 wt% of solid content concentration was prepared with ion-exchange water followed by a pH adjustment fixing the pH to a value (that allows for the dispersion of the oxidized cellulose) of each condition indicated in Table 5 using 0.5N NaOH(aq). Incidentally, the pH adjustment was not carried out in each of the conditions 2-5 and 8. Afterward, the solution was stirred for a time presented in each condition in Table 5 using a high-speed blender to obtain a transparent cellulose nanofiber dispersion liquid (composition for forming a film).

Average fiber width and degree of crystallinity of the resultant cellulose nanofiber were measured according to the method described previously in this specification. In addition, waterproofness was measured in the following way. The results are shown in Table 6A.

<Evaluating waterproofness>

A cast film was fabricated using the cellulose nanofiber dispersion liquid. After being measured by the weight (g), the cast film was immersed in pure water for one minute. After the cast film was taken out from the pure water and extra water left on the surface was removed, its weight (g) was again measured. An expansion ratio of the cast film by swelling was calculated by the following formula using its weights before and after immersing in water. The lower the expansion ratio, the higher the waterproofness obtained because swelling with water was more difficult.

"Expansion ratio by swelling with water" = "weight after immersing in water" / "weight before immersing in water"

<<Reference examples 1-4>>

<Fabrication of gas barrier film in Reference examples 1-4>

The cellulose nanofiber dispersion liquids prepared in the conditions 1-4 were used as the coating liquid in Reference examples 1-4, respectively. A gas barrier film was fabricated by coating the coating liquid to have a thickness 0.25 $\mu$m by a bar coat method on a 12 $\mu$m thick PET film (LUMIRROR® P60, made by Toray Industries, Inc.) substrate followed by drying at 120 °C for 15 minutes to form a gas barrier.

<<Comparative examples 10-13>>

<Fabrication of gas barrier film in Comparative examples 10-13>

The cellulose nanofiber dispersion liquids prepared in the conditions 5-8 were used as the coating liquid in Comparative examples 10-13, respectively. A gas barrier film was fabricated by coating the coating liquid to have a thickness 0.25 $\mu$m by a bar coat method on a 12 $\mu$m thick PET film (LUMIRROR® P60, made by Toray Industries, Inc.) substrate followed by drying at 120 °C for 15 minutes to form a gas barrier.

Haze of the resultant gas barrier films was measured according to the method described previously in this specification. In addition, oxygen permeability was measured in the following way. The results were shown in Table 6B.

<Oxygen permeability (equal-pressure method) (cm$^3$/m$^2$•day•Pa)>

The measurement was performed under a highly-humid (70 %RH) atmosphere using an oxygen permeation rate test system MOCON OX-TRAN 2/21 (made by Modern Controls, Inc.).

Table 5

|  | TEMPO oxidation | | Dispersion treatment | |
| --- | --- | --- | --- | --- |
|  | Temperature (°C) | Time (min.) | pH | Time (min.) |
| Condition 1 | 25 | 180 | 6 | 60 |
| Condition 2 | 35 | 210 | No adjustment | 30 |
| Condition 3 | 35 | 210 | No adjustment | 60 |
| Condition 4 | 35 | 360 | No adjustment | 60 |
| Condition 5 | 35 | 210 | No adjustment | 10 |
| Condition 6 | 25 | 90 | 10 | 60 |
| Condition 7 | 25 | 120 | 8 | 60 |
| Condition 8 | 45 | 360 | No adjustment | 60 |

Table 6A

|  | Condition | Carboxy group amount (mmol/g) | Average fiber width (nm) | Degree of crystallinity (%) |
| --- | --- | --- | --- | --- |
| Reference example 1 | Condition 1 | 2.21 | 4.2 | 74 |
| Reference example 2 | Condition 2 | 2.80 | 34.1 | 76 |
| Reference example 3 | Condition 3 | 2.80 | 3.7 | 75 |
| Reference example 4 | Condition 4 | 3.13 | 3.4 | 72 |
| Comparative example 10 | Condition 5 | 2.80 | 100.2 | 76 |
| Comparative example 11 | Condition 6 | 1.52 | 7.9 | 76 |
| Comparative example 12 | Condition 7 | 1.86 | 8.0 | 76 |
| Comparative example 13 | Condition 8 | 4.52 | Unmeasurable | 48 |

Table 6B

| | Condition | Waterproofness (expansion ratio by swelling) | Haze (%) | Oxygen permeability (cm$^3$/m$^2$·day·Pa) |
|---|---|---|---|---|
| Reference example 1 | Condition 1 | 4.9 | 2.2 | 69 |
| Reference example 2 | Condition 2 | 4.7 | 10.1 | 72 |
| Reference example 3 | Condition 3 | 1.8 | 2.1 | 64 |
| Reference example 4 | Condition 4 | 1.6 | 2.1 | 59 |
| Comparative example 10 | Condition 5 | 5.6 | 15.7 | 100 |
| Comparative example 11 | Condition 6 | 13.9 | 2.3 | 136 |
| Comparative example 12 | Condition 7 | 11.7 | 2.2 | 133 |
| Comparative example 13 | Condition 8 | 1.8 | 2.4 | Unmeasurable |

It was concluded from the results above that the resultant film fabricated using a composition for forming a film which contained the cellulose nanofiber having 2-4 mmol/g of carboxy group amount and had 50 nm or lower average fiber width achieved good oxygen barrier properties under a high humidity (70%RH) condition. Particularly, in the case of using a composition for forming a film which contained the cellulose nanofiber having 2.5-4 mmol/g of carboxy group amount, 50 nm or lower of oxidized cellulose fiber was produced and the film with good oxygen barrier properties under a high humidity (70%RH) condition was achieved by employing a stirring with a high-speed blender for 30 minutes regardless of an absence of pH adjustment using 0.5N NaOH(aq). In other words, in the case of using a composition for forming a film which contained the cellulose nanofiber having 2.5-4 mmol/g of carboxy group amount, it was possible to obtain 50 nm or lower of cellulose fiber without adding a cation such as sodium ion, and thus, to form a film with good oxygen barrier properties under a high humidity (70%RH) condition.

In addition, it is possible to provide the film with higher gas barrier properties under a high humidity condition, for example, if alkoxysilane hydrolysates were added to the composition for forming a film above. Examples of the alkoxysilane are tetramethoxysilane, tetraethoxysilane, methyltrimethoxysilane, methyltriethoxysilane, dimethyldimethoxysilane and dimethyldiethoxysilane etc. Among these, tetraethoxysilane (TEOS) is preferable.

**Claims**

1.  A composition for forming a film comprising:

    a silane coupling agent having at least two hydrolytic groups which are bonded to the silicon atom, wherein a silane coupling agent having two or three hydrolytic groups and having an amino group is included in said silane coupling agent; and
    an aqueous dispersion liquid in which a cellulose nanofiber is dispersed in an aqueous medium.

2.  The composition for forming a film according to claim 1, wherein a ratio of said silane coupling agent added to said aqueous dispersion liquid is in the range of 0.5-150 wt% with respect to said cellulose nanofiber.

3.  The composition for forming a film according to claim 2, wherein a ratio of said silane coupling agent having an amino group added to said aqueous dispersion liquid is in the range of 0.5-30 wt% with respect to said cellulose nanofiber.

4. The composition for forming a film according to claim 1, wherein said cellulose nanofiber is a crystalline cellulose and has a cellulose I type crystal structure.

5. The composition for forming a film according to claim 4, wherein said cellulose nanofiber comprises oxidized cellulose.

6. The composition for forming a film according to claim 5, wherein said oxidized cellulose is obtained by an oxidation reaction using a nitroxyl radical derivative.

7. The composition for forming a film according to claim 6, further comprising an inorganic layered compound.

8. A film sheet comprising a film formed using said composition for forming a film according to claim 1.

9. The film sheet according to claim 8, wherein said film is laminated on a substrate.

10. The film sheet according to claim 9, wherein a deposited layer comprising an inorganic compound is formed on a surface of said substrate.

11. The film sheet according to claim 10, wherein said inorganic compound is selected from the group of aluminum oxide, magnesium oxide and silicon oxide.

12. The film sheet according to either claim 8 or claim 9, further comprising a thermoplastic resin layer which makes it possible to weld or adhere by heat.

13. Use of a film sheet according any one claim from claim 8 to claim 12 as a gas barrier material.


**Patentansprüche**

1. Zusammensetzung zum Bilden eines Films, die umfasst:

   ein Silankupplungsmittel mit zumindest zwei hydrolytischen Gruppen, welche zu einem Siliciumatom gebunden sind, wobei ein Silankupplungsmittel mit zwei oder drei hydrolytischen Gruppen und mit einer Aminogruppe in dem Silankupplungsmittel beinhaltet ist; und
   eine wässrige Dispersionsflüssigkeit, in welcher eine Cellulosenanofaser in einem wässrigen Medium dispergiert ist.

2. Zusammensetzung zum Bilden eines Films nach Anspruch 1, wobei ein Verhältnis des Silankupplungsmittels, das zu der wässrigen Dispersionsflüssigkeit zugegeben wird, in dem Bereich von 0,5-150 Gew.-% bezüglich der Cellulosenanofaser ist.

3. Zusammensetzung zum Bilden eines Films nach Anspruch 2, wobei ein Verhältnis des Silankupplungsmittels mit einer Aminogruppe, die zu der wässrigen Dispersionsflüssigkeit zugegeben wird, in dem Bereich von 0,5-30 Gew.-% bezüglich der Cellulosenanofaser ist.

4. Zusammensetzung zum Bilden eines Films nach Anspruch 1, wobei die Cellulosenanofaser eine kristalline Cellulose ist und eine Cellulose I-Typ Kristallstruktur aufweist.

5. Zusammensetzung zum Bilden eines Films nach Anspruch 4, wobei die Cellulosenanofaser oxidierte Cellulose umfasst.

6. Zusammensetzung zum Bilden eines Films nach Anspruch 5, wobei die oxidierte Cellulose durch eine Oxidationsreaktion unter Verwendung eines Hydroxylradikalderivats erhalten ist.

7. Zusammensetzung zum Bilden eines Films nach Anspruch 6, die ferner eine anorganische geschichtete Verbindung umfasst.

8. Filmlage, die einen Film umfasst, der unter Verwendung der Zusammensetzung zum Bilden eines Films nach Anspruch 1 gebildet ist.

**9.** Filmlage nach Anspruch 8, wobei der Film auf ein Substrat laminiert ist.

**10.** Filmlage nach Anspruch 9, wobei eine abgeschiedene Schicht, die eine organische Verbindung umfasst, auf einer Oberfläche des Substrats gebildet ist.

**11.** Filmlage nach Anspruch 10, wobei die anorganische Verbindung ausgewählt ist aus der Gruppe bestehend aus Aluminiumoxid, Magnesiumoxid und Siliciumoxid.

**12.** Filmlage nach einem der Ansprüche 8 oder 9, die ferner eine thermoplastische Harzschicht umfasst, die es möglich macht, durch Wärme zu schweißen oder anzuhaften.

**13.** Verwendung einer Filmlage nach einem der Ansprüche 8 bis 12 als ein Gassperrmaterial.

**Revendications**

**1.** Composition pour former un film comprenant :

un agent de couplage au silane ayant au moins deux groupes hydrolytiques qui sont liés à l'atome de silicium, dans laquelle un agent de couplage au silane ayant deux ou trois groupes hydrolytiques et ayant un groupe amino est inclus dans ledit agent de couplage au silane ; et
une dispersion aqueuse liquide dans laquelle une nanofibre de cellulose est dispersée dans un milieu aqueux.

**2.** Composition pour former un film selon la revendication 1, dans laquelle un rapport entre ledit agent de couplage au silane ajouté et ladite dispersion aqueuse liquide est compris dans la plage de 0,5 à 150 % en poids par rapport à ladite nanofibre de cellulose.

**3.** Composition pour former un film selon la revendication 2, dans laquelle un rapport entre ledit agent de couplage au silane ayant un groupe amino ajouté et ladite dispersion aqueuse liquide est compris dans la plage de 0,5 à 30 % en poids par rapport à ladite nanofibre de cellulose.

**4.** Composition pour former un film selon la revendication 1, dans laquelle ladite nanofibre de cellulose est une cellulose cristalline et a une structure en cellulose cristalline de type I.

**5.** Composition pour former un film selon la revendication 4, dans laquelle ladite nanofibre de cellulose comprend la cellulose oxydée.

**6.** Composition pour former un film selon la revendication 5, dans laquelle ladite cellulose oxydée est obtenue par une réaction d'oxydation en utilisant un dérivé du radical nitroxyle.

**7.** Composition pour former un film selon la revendication 6, comprenant en outre un composé en couches inorganique.

**8.** Feuille de film comprenant un film formé en utilisant ladite composition pour former un film selon la revendication 1.

**9.** Feuille de film selon la revendication 8, dans laquelle ledit film est stratifié sur un substrat.

**10.** Feuille de film selon la revendication 9, dans laquelle une couche déposée comprenant un composé inorganique est formée sur une surface dudit substrat.

**11.** Feuille de film selon la revendication 10, dans laquelle ledit composé inorganique est choisi dans le groupe constitué d'oxyde d'aluminium, d'oxyde de magnésium et d'oxyde de silicium.

**12.** Feuille de film selon l'une ou l'autre revendication 8 ou revendication 9, comprenant en outre une couche de résine thermoplastique qui permet de souder ou d'adhérer par la chaleur.

**13.** Utilisation d'une feuille de film selon l'une quelconque des revendications 8 à 12 comme matériau de barrière gazeuse.

EP 2 554 589 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2551104 A1
- EP 2551105 A1
- WO 2010055839 A1
- EP 2130672 A1
- JP 2008001728 A
- JP H06316025 A
- JP H07164591 A
- JP 2002173631 A
- JP 2001334600 A
- JP 2008308802 A
- JP 2009057772 A